# EUROPEAN PATENT APPLICATION

(11) **EP 3 125 104 A1**
(43) Date of publication of application: **01.02.2017**
(21) Application number: 15802363.0
(22) Date of filing: 02.06.2015
(51) Int. Cl.: G06F 3/12, G06F 3/048

(54) **IMAGE FORMING APPARATUS AND IMAGE FORMING METHOD**

(30) Priority: 02.06.2014 KR 20140066844; 16.06.2014 KR 20140072912; 01.10.2014 KR 20140132542
(71) Applicant: S-Printing Solution Co., Ltd., Gyeonggi-do 16677 (KR)
(72) Inventor: YUN, Tae-jung, Seoul 135-270 (KR); CHO, Jae-wook, Seoul 137-863 (KR); KIM, Hong-seock, Suwon-si Gyeonggi-do 443-848 (KR); CHOI, Chang-seok, Suwon-si Gyeonggi-do 443-751 (KR); KIM, Hye-soo, Suwon-si Gyeonggi-do 443-751 (KR)
(74) Representative: Taor, Simon Edward William
(86) International application number: PCT/KR2015/005508
(87) International publication number: WO 2015/186947

(57) **Abstract**

An image forming apparatus is disclosed. The image forming apparatus comprises: a storage unit which, from among a plurality of image forming apparatuses, stores information about at least one other image forming apparatus which constitutes a virtual device and an image forming apparatus; a communication unit for performing communication with the at least one other image forming apparatus; a user interface unit for displaying a UI screen including an object corresponding to the virtual device; a task processing unit; and a control unit which, when a virtual device is selected through the UI screen and a job execution command is inputted, controls the task processing unit to process at least one first task among a plurality of tasks constituting one job, requests the at least one other image forming apparatus to process at least one second task among a plurality of tasks, and distributes the job.

## Description

### TECHNICAL FIELD

The present invention relates to an image forming apparatus and an image forming method, and more particularly, to an image forming apparatus capable of extending and using a function of the image forming apparatus by connecting image forming apparatuses having different at least one tasks among a plurality of image forming apparatuses, and an image forming method.

### BACKGROUND ART

In general, an image forming apparatus refers to an apparatus that prints printing data, which is generated in a terminal apparatus such as a computer, on a recording sheet. Examples of the image forming apparatus may include a copier, a printer, a fax machine, a Multi Function Peripheral (MFP) that complexly realizes their functions through one device, and the like.

Several or several tens of image forming apparatuses are frequently operated in an enterprise or a government office. In an enterprise or government office environment as described above, a user may perform a job by selecting an image forming apparatus wanted by the user.

Here, the user performs the job by selecting an image forming apparatus supporting a function that the user wants to use or selecting an image forming apparatus capable of quickly processing a function that the user wants to use.

However, an apparatus that satisfies a user demand as described above may generally a new model image forming apparatus that is lately installed. Therefore, in a printing environment where a plurality of image forming apparatuses exist, jobs are concentrated on a particular image forming apparatus rather than the plurality of image forming apparatuses equally perform jobs.

For example, if jobs wanted by a plurality of users are copy jobs in a network environment where one MFP and four printers exist, jobs of the plurality of users are concentrated on the one MFP, and the other four printers are not appropriately used.

Alternatively, if a job wanted by a user a copy job in a network environment where one scanner and four printers exist, the copy job may not be used, and thus a copier or an MFP capable of performing copying is newly installed.

Alternatively, a user is to perform copying by individually performing a scan job by using a scanner and then performing a printing job by using a scan result and a printer.

Also, a B2B market where printer management solution providers manage printers of government offices, universities, or enterprises has been recently developed. In such a B2B market, a printer management solution provider discusses and determines printing cost per each sheet and the like with a customer and calculates printing charges by collecting an output amount of an image forming apparatus within a charging period.

However, since the above-described charging method is applied to B2B, i.e., an existing charging method is a method of processing charging aimed at a fixed customer, a general individual user is difficult to use an image forming apparatus that operates in a charging system described above.

However, if a service is provided for merely a fixed customer, a use frequency of an image forming apparatus is limited. In other words, if an unspecific general user also uses an image forming apparatus with providing a service for a fixed customer, a use frequency of the image forming apparatus may become higher.

Therefore, there is a need for a method of enabling a general individual user to easily use an image forming apparatus and easily processing charges for uses of the image forming apparatus.

### DETAILED DESCRIPTION OF THE INVENTION

### TECHNICAL PROBLEM

The present invention provides an image forming apparatus capable of grouping a plurality of image forming apparatuses, and extending and using functions of the image forming apparatuses, and a printing control method.

The present invention also provides a cloud server, a mobile device, and an image forming apparatus capable of providing a function of an image forming apparatus even for an unspecific user and easily charging for using of the function of the image forming apparatus, and a printing control method.

### TECHNICAL SOLUTION

According to an aspect of the present invention, an image forming apparatus connected to a network including a plurality of image forming apparatuses, may include: a storage unit which stores information about at least one other image forming apparatus constituting a virtual device along with the image forming apparatus among the plurality of image forming apparatuses; a communication unit which performs communication with the at least one other image forming apparatus; a user interface unit which displays a UI screen comprising an object corresponding to the virtual device; a task processing unit; and a control unit which, if the virtual device is selected and a job execution command is input through the user interface unit, controls the task processing unit to process at least one first task among a plurality of tasks constituting one job, requests the at least one other image forming apparatus to process at least one second task among the plurality of tasks, and distributes the job.

The control unit may select the other image forming apparatus based on distances of the image forming apparatus from the plurality of image forming apparatuses and automatically match the selected other image forming apparatus with the image forming apparatus to generate the virtual device.

The communication unit may receive adjacent access point information of each of the plurality of image forming apparatuses. The control unit may search for an access point accessible by the image forming apparatus, select other image forming apparatus adjacent to the image forming apparatus based on the searched access point and the received adjacent access point information, and match the selected image forming apparatus with the virtual device.

The control unit may select other image forming apparatus positioned in a shortest distance among the plurality of image forming apparatuses based on a distance from a user position and automatically match the selected other image forming apparatus with the image forming apparatus to generate the virtual device.

The control unit may automatically select at least one other image forming apparatus among the plurality of image forming apparatuses based on a preset priority criterion and automatically match the selected other image forming apparatus with the image forming apparatus to generate the virtual device. The preset priority criterion may be set based on at least one selected from job execution cost, a job execution speed, a distance between apparatuses, and a distance between an apparatus and a user.

If user position information is input through the UI screen, the control unit may automatically select an image forming apparatus corresponding to the user position information among the plurality of image forming apparatuses and match the selected image forming apparatus with the virtual device.

If the image forming apparatus matches respectively with the plurality of image forming apparatuses to generate a plurality of virtual devices, the control unit may display a UI screen including a plurality of objects respectively corresponding to the plurality of virtual devices on the user interface unit.

If one object is selected on the UI screen, the control unit may display a UI screen including a menu provided from a virtual device corresponding to the selected object.

The control unit may transmits information about the virtual device and position information of the image forming apparatus to a server apparatus to register the information about the virtual device and the position information of the image forming apparatus.

If user identification information is input, the control unit may request a virtual device generation history corresponding to the user identification information from the server apparatus, receive the virtual device generation history, display the virtual device generation history on the user interface unit, and if one of the virtual device generation history is selected, restore a virtual device based on virtual device information corresponding to the selected history.

If a plurality of other image forming apparatuses match with the virtual device, the control unit may differently adjust a size of a task, which is to be processed by the plurality of other image forming apparatuses, based on distances between the plurality of other image forming apparatuses and the image forming apparatus.

If the image forming apparatus matches with the at least one other image forming apparatus to generate the virtual device, the control unit may display a UI screen, which activates and displays at least one option settable in the virtual device, on the user interface unit.

The communication unit may receive UI option information from at least one other image forming apparatus constituting a virtual device along with the image forming apparatus. The control unit may apply the UI option information to a UI layout of the image forming apparatus to generate a UI screen for setting an option of the at least one other image forming apparatus and display the UI screen on the user interface unit.

If at least one first task is processed in the image forming apparatus, and at least one second task is processed in the at least one other image forming apparatus, the control unit may control the communication unit to transmit position images and job execution information of the image forming apparatus and the at least one other image forming apparatus to a preset user contact number.

The task processing unit may process the at least one first task to output a printed result. If the printed result has discontinuous page information, the control unit may control the task processing unit to change a printing output direction of a part of the printed result where page information is discontinuous.

The communication unit may receive at least one task request associated with a job execution command input from at least one other image forming apparatus from the at least one image forming apparatus constituting a virtual device with the image forming apparatus. The control unit may control the task processing unit to process the received at least one task.

According to another aspect of the present invention, an image forming method of an image forming apparatus connected to a network including a plurality of image forming apparatuses, may include: generating a virtual device by matching at least one other image forming apparatus among the plurality of image forming apparatuses with the image forming apparatus; displaying a UI screen including an object corresponding to the virtual device; if the virtual device is selected, and a job execution command is input through the user interface unit, processing at least one first task among a plurality of tasks constituting one job in the image forming apparatus; and distributing the job by requesting the at least one other image forming apparatus to process at least one second task among the plurality of tasks.

The generating of the virtual device may include selecting the other image forming apparatus based on distances between the plurality of image forming apparatuses and the image forming apparatus and automatically matching the selected other image forming apparatus with the image forming apparatus to generate the virtual device.

The image forming method may further include receiving adjacent access point information of each of the plurality of image forming apparatuses. The generating of the virtual device may include searching for an access point accessible by the image forming apparatus and selecting other image forming apparatus adjacent to the image forming apparatus based on the searched access point and the received adjacent access point information to match the selected other image forming apparatus with the virtual device.

The image forming method may further include automatically selecting at least one other image forming apparatus among the plurality of image forming apparatuses based on a preset priority criterion and automatically matching the selected at least one other image forming apparatus with the image forming apparatus to generate the virtual device. The preset priority criterion may be at least one selected from job execution cost, a job execution speed, a distance between apparatuses, and a distance between an apparatus and a user.

According to another aspect of the present invention, a cloud server may include: a communication interface unit which receives a job execution request and position information of a mobile device from the mobile device; a search unit which searches for at least one image forming apparatus adjacent to the mobile device among the plurality of image forming apparatuses based on position information of a plurality of image forming apparatuses where the received position information of the mobile device is pre-stored; and a control unit which provides the mobile device with position information about the searched image forming apparatus and controls the communication interface unit to transmit information for identifying a user corresponding to the mobile device to the searched image forming apparatus.

The information for identifying the user may include at least one selected from a pin code corresponding to the job execution request, a phone number of the mobile device, and login information of the user.

The communication interface unit may receive a printing file from the mobile device. The control unit may convert the received printing file into printing file proccessible by the selected image forming apparatus and control the communication interface unit to transmit the converted printing data to the selected image forming apparatus.

The communication interface unit may receive a function of an image forming apparatus to be used and option information of the function. The search unit may search for at least one image forming apparatus adjacent to the mobile device among the plurality of image forming apparatuses further in consideration of the received function and the option information.

The communication interface unit may receive state information of the plurality of image forming apparatuses. The search unit may search for at least one image forming apparatus adjacent to the mobile device among currently usable image forming apparatuses based on the received state information.

The search unit may search for at least one image forming apparatus adjacent to the mobile device among the plurality of image forming apparatuses further in consideration of pre-stored operation time information about the plurality of image forming apparatuses.

The communication interface unit may receive a function of an image forming apparatus to be used and option information of the function. The control unit may calculate charges based on the received function and the option information of the function, notify the mobile device of the charges, and if payment information is received from the mobile device, control the communication interface unit to transmit information for identifying a user corresponding to the mobile device to the searched image forming apparatus.

The control unit may calculate charges in consideration of the received function, the option information of the function, and charge cost of the selected image forming apparatus.

According to another aspect of the present invention, a mobile device may include: a position sensing unit which generates position information of the mobile device; a communication interface unit which transmits a job execution request and the generated position information to the cloud server and receives position information about at least one image forming apparatus adjacent to the mobile device and charges from the cloud server; a display unit which displays the received position information about the at least one image forming apparatus; and a control unit which, if an image forming apparatus that is to execute a job is selected, controls the communication interface unit to provide the cloud server with information about the selected image forming apparatus and payment information corresponding to the charges.

The mobile device may further include a storage unit which stores a printing file, and the communication interface unit may transmit the printing file to the cloud server.

According to another aspect of the present invention, an image forming apparatus connectable to a cloud server, may include: a communication interface unit which transmits operation time information of the image forming apparatus to the cloud server and receives a job execution command and first user identification information corresponding to the job execution command within a time corresponding to the operation time information; an input which receives second user identification information; and a function unit which, the first user identification information corresponds to the second user identification information, performs a function corresponding to the job execution command.

The function unit may include an image forming unit which executes a printing job, a scanning unit which executes a scan job, and a faxing unit which performs a fax transmission. The control unit may control the image forming unit to print printing data received from the cloud server if the requested job execution command is a printing command, control the scanning unit and the image forming unit to scan a manuscript and print the scanned manuscript if the requested job execution command is a copy command, and control the scanning unit and the communication interface unit to scan the manuscript and transmit an image of the scanned manuscript to a preset storage place if the requested job execution command is a scan job, and control the scanning unit and the faxing unit to scan the manuscript and transmit an image of the scanned manuscript by fax if the requested job execution command is a fax job.

The communication interface unit may notify the cloud server of at least one selected from state information of the image forming apparatus and a job execution result.

According another aspect of the present invention, a printing control method of a cloud server, may include: receiving a job execution request and position information of the mobile device from the mobile device; searching for at least one image forming apparatus adjacent to the mobile device among a plurality of image forming apparatuses based on position information of the plurality of image forming apparatuses where the received position information of the mobile device is pre-stored; providing the mobile device with position information about the searched image forming apparatus; and transmitting information for identifying a user corresponding to the mobile device to the searched image forming apparatus.

The information for identifying the user may include at least one selected from a pin code corresponding to the job execution request, a phone number of the mobile device, and login information of the user.

The printing control method of the cloud server may further include receiving a printing file from the mobile device; converting the received printing file into printing data processible by the selected image forming apparatus; and transmitting the converted printing data to the selected image forming apparatus.

The receiving may include further receiving a function of an image forming apparatus and option information of the function, and the searching may include searching for at least one image forming apparatus adjacent to the mobile device among the plurality of image forming apparatus further in consideration of the received function and the option information.

The printing control method of the cloud server may further include receiving state information of the plurality of image forming apparatuses. The searching may include searching for at least one image forming apparatus adjacent to the mobile device among currently usable image forming apparatuses based on the received state information.

The searching may include searching for at least one image forming apparatus adjacent to the mobile device among the plurality of image forming apparatuses further in consideration of operation time information of each of the plurality of image forming apparatuses.

The receiving may further include receiving a function of an image forming apparatus to be used and option information of the function. The printing control method may further include calculating charges based on the received function and the option information of the function; notifying the mobile device of the calculated charges; and receiving payment information from the mobile device. The transmitting of the information for identifying the user may include transmitting the information for identifying the user corresponding to the mobile device to the searched image forming apparatus merely if the payment information is received.

The calculating may include calculating the charges in consideration of the received function, the option information of the function, and charge cost of the selected image forming apparatus.

According to another aspect of the present invention, a printing control method of a mobile device may include: generating position information of the mobile device; transmitting a job execution request and the generated position information to a cloud server; receiving position information and charges about at least one image forming apparatus adjacent to the mobile device from the cloud server; displaying the received position information about the at least one image forming apparatus; and, if an image forming apparatus that is to execute a job is selected, providing the cloud server with information about the selected image forming apparatus and payment information corresponding to the charges.

According to another aspect of the present invention, a printing control method of an image forming apparatus may include: transmitting operation time information of the image forming apparatus to a cloud server; receiving a job execution command and first user identification information corresponding to the job execution command within a time corresponding to the operation time information; receiving second user identification information; and, if the first user identification information corresponds to the second user identification information, performing a function corresponding to the job execution command.

According to another aspect of the present invention, a computer readable recording medium may include a program for executing a printing control method of a cloud server. The printing control method may include: receiving a job execution command and position information of the mobile device from the mobile device; searching for at least one image forming apparatus adjacent to the mobile device among a plurality of image forming apparatuses based on position information of the plurality of image forming apparatuses where the received position information of the mobile device is pre-stored; providing the mobile device with position information about the searched image forming apparatus; and transmitting information for identifying a user corresponding to the mobile device to the searched image forming apparatus.

### DESCRIPTION OF THE DRAWINGS

FIG. 1 is a block diagram illustrating an image forming system according to an exemplary embodiment of the present invention.
FIG. 2 is a block diagram illustrating a configuration of an image forming apparatus of FIG. 1.
FIG. 3 is a block diagram illustrating a configuration of an image forming apparatus according to another exemplary embodiment of the present invention.
FIG. 4 is a flowchart illustrating an image forming method according to an exemplary embodiment of the present invention.
FIGS. 5 and 6 are views illustrating a method of constituting a virtual device, according to an exemplary embodiment of the present invention.
FIG. 7 is a view illustrating a method of constituting a virtual device, according to another exemplary embodiment of the present invention.
FIGS. 8 and 9 are views illustrating a method of constituting a virtual device, according to another exemplary embodiment of the present invention.
FIGS. 10 and 11 are views illustrating a method of constituting a virtual device, according to another exemplary embodiment of the present invention.
FIG. 12 is a view illustrating a method of constituting a virtual device for distributing a job.
FIGS. 13 through 15 are views illustrating a UI screen for a virtual device, according to an exemplary embodiment of the present invention.
FIGS. 16 and 17 are views illustrating a UI screen for a virtual screen, according to another exemplary embodiment of the present invention.
FIG. 18 is a view illustrating a UI screen for a virtual device, according to another exemplary embodiment of the present invention.
FIGS. 19 and 20 are views illustrating a UI screen according to an error occurrence.
FIGS. 21 and 22 are views illustrating a method of outputting a printed result from a virtual device, according to an exemplary embodiment of the present invention.
FIG. 23 is a view illustrating a method of outputting a printed result from a virtual device, according to another exemplary embodiment of the present invention.
FIGS. 24 and 25 are views illustrating a method of outputting a printed result from a virtual device, according to another exemplary embodiment of the present invention.
FIGS. 26 and 27 are views illustrating a method of restoring a virtual device by using a server apparatus.
FIG. 28 is a block diagram illustrating a printing system according to an exemplary embodiment of the present invention.
FIG. 29 is a view illustrating an operation of a printing system according to an exemplary embodiment of the present invention.
FIG. 30 is a block diagram illustrating a detailed configuration of a mobile device of FIG. 28.
FIG. 31 is a block diagram illustrating a detailed configuration of an image forming apparatus of FIG. 28.
FIG. 32 is a block diagram illustrating a detailed configuration of a cloud server of FIG. 28.
FIG. 33 is a sequence diagram illustrating an operation of a printing system according to an exemplary embodiment of the present invention.
FIGS. 34 through 37 are views illustrating various examples of a user interface window that may be displayed on a mobile device of FIG. 37.
FIG. 38 is a view illustrating an example of a user interface window that may be displayed on an image forming apparatus of FIG. 28.
FIG. 39 is a flowchart illustrating a printing control method in a mobile device, according to an exemplary embodiment of the present invention.
FIG. 40 is a flowchart illustrating a printing control method in a cloud server, according to an exemplary embodiment of the present invention.
FIG. 41 is a flowchart illustrating a printing control method in an image forming apparatus, according to another exemplary embodiment of the present invention.

### MODE OF THE INVENTION

Hereinafter, an exemplary embodiments of the present invention will be described in more detail with reference to the attached drawings. However, in the following description of the present invention, detailed descriptions of associated well-known functions or elements are omitted when they are determined as unnecessarily burring the main point of the present invention.

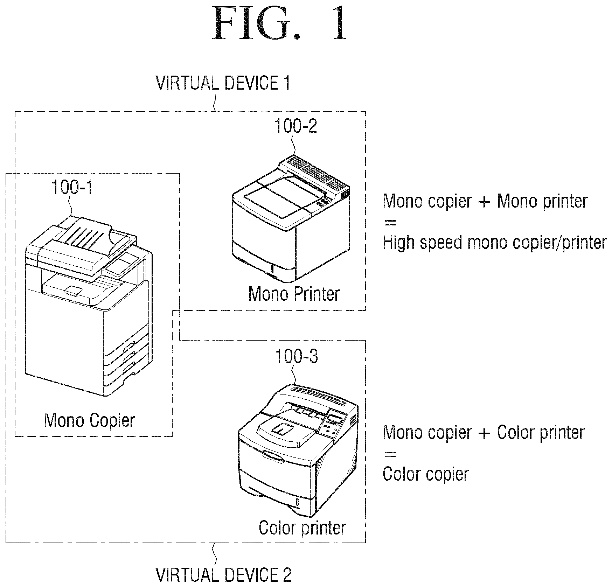

FIG. 1 is a block diagram illustrating an image forming system according to an exemplary embodiment of the present invention.

Referring to FIG. 1, an image forming system 1000 according to the exemplary embodiment of the present invention includes a plurality of image forming apparatuses 100-1,100-2, and 100-3 that are connected to each other through a network. The plurality of image forming apparatuses 100-1, 100-2, and 100-3 may be respectively a printer, a scanner, a copier, a fax machine, and a Multi Function Peripheral (MFP) capable of performing at least one selected from a scanning function, a printing function, a faxing function, and an image editing function.

If a job execution command is input, the plurality of image forming apparatuses 100-1, 100-2, and 100-3 execute a job. Here, the job execution command may be directly input into each apparatus by a user or may be input through a user terminal apparatus such as a PC, a notebook computer, a smartphone, a PMP, an MP3 player, or the like.

Hereinafter, operations of the plurality of image forming apparatuses 100-1, 100-2, and 100-3 of the exemplary embodiment of the present invention, which are performed if the user inputs the job execution command into the first image forming apparatus 100-1, will be described. However, the following descriptions are not limited to the first image forming apparatus 100-1, and if the job execution command is input into the second image forming apparatus 100-2 or the third image forming apparatus 100-3, the second image forming apparatus 100-2 or the third image forming apparatus 100-3 may perform the same operation as the first image forming apparatus 100.

The job execution command may be an execution command of a job including at least one first task that is executable in the first image forming apparatus 100-1 or an execution command of a job further needing at least one second task that is executed in the second image forming apparatus 100-2 or the third image forming apparatus 100-3, besides the at least one first task.

If the job execution command is input, the first image forming apparatus 100-1 determines whether to process a plurality of tasks constituting one job corresponding to the job execution command. Here, the job maybe copying, printing, fax-sending, fax-receiving, scan-to-email, scan-to-fax, scan-to-PC, or the like. Also, the copying is a job including a scan task and a printing task, the fax-sending is a job including a scan task and a communication task, and the fax-receiving is a job including a communication task and a printing task. In addition, the printing may be a job including a mono printing task and a color printing task or a job including a plurality of printing tasks divided into two or more tasks.

If it is determined that the first image forming apparatus 100-1 is not capable of performing at least some tasks of a plurality of tasks constituting a job or quick job processing is needed in relation to the job execution command, the first image forming apparatus 100-1 matches with the second image forming apparatus 100-2 connected to the network to constitute a virtual device 1. Alternatively, the first image forming apparatus 100-1 matches with the third image forming apparats 100-3 connected to the network to constitute a virtual device 2.

If the first image forming apparatus 100-1 constitutes the virtual device 1 or the virtual device 2, the first image forming apparatus 100-1 may be a master device for controlling the second image forming apparatus 100-2 or the third image forming apparatus 100-3. Also, the second image forming apparatus 100-2 or the third image forming apparatus 100-3 may be a slave device operating under control of the first image forming apparatus 100-1.

If the first image forming apparatus 100-1 is not capable of executing at least some of the plurality of tasks constituting the job or the quick job processing is needed as described above, the first image forming apparatus 100-1 may constitute the virtual device 1 or the virtual device 2.

Therefore, the first image forming apparatus 100-1 distributes the job including the plurality of tasks by requesting the second image forming apparatus 100-2 matching with the virtual device 1 or the third image forming apparatus 100-3 matching with the virtual device 2 to process at least some tasks inexecutable in the first image forming apparatus 100-1.

There will be described in detail an operation of the first image forming apparatus 100-1 for distributing a job if the first image forming apparatus 100-1 is a mono copier supporting a scan task and a mono printing task, the second image forming apparatus 100-2 is a mono printer supporting a mono printing task, and the third image forming apparatus 100-3 is a color printer supporting a color printing task.

If a copy job execution command of a manuscript including a mono document is input, the first image forming apparatus 100-1 may generate mono scan data by scanning the manuscript and prepare printing of the mono scan data.

If the first image forming apparatus 100-1 currently executes a mono printing task of another job or an error, such as no toner, paper jams, or the like, occurs in a task processing unit (e.g., a printing unit) executing mono printing, the first image forming apparatus 100-1 may search for the second image forming apparatus 100-2 supporting the mono printing task on the network and matches with the second image forming apparatus 100-2 to constitute the virtual device 1.

Also, the first image forming apparatus 100-1 may request the second image forming apparatus 100-2 matching with the virtual device 1 to process a mono printing task of mono scan data. Therefore, even if the mono printing task is inexecutable, the first image forming apparatus 100-1 may control the second image forming apparatus 100-2 to process the mono printing task. In other words, the virtual device 1 may include the first image forming apparatus 100-1 that is the mono copier and the second image forming apparatus 100-2 that is the mono printer so as to operate as a high-speed mono copier.

If a copy job execution command of a manuscript including a mono document and a color document is input, the first image forming apparatus 100-1 generates mono scan data and color scan data by scanning the manuscript.

A copy job of the manuscript including the mono document and the color document includes a scanning task, a mono printing task, and a color printing task, but the color printing task is not supported in the first image forming apparatus 100-1. Therefore, although the first image forming apparatus 100-1 is capable of generating color scan data of the color document, it is impossible to print the color scan data in color.

An existing image forming apparatus prints both of mono scan data and color scan data in black, but this is not a printed result of a quality (color) wanted by the user, and thus a user satisfaction of the copy job is lowered.

However, the first image forming apparatus 100-1 may search for the third image forming apparatus 100-3 supporting a color printing task on the network and request the third image forming apparatus 100-3 to process the color printing task of the color scan data. Therefore, even if the first image forming apparatus 100-1 does not support the color printing task, the first image forming apparatus 100-1 may control the third image forming apparatus 100-3 to process the color printing task. In other words, the virtual device 2 may include the first image forming apparatus 100-1 that is the mono copier and the third image forming apparatus 100-3 that is the color printer so as to operate as a color copier.

If a copy job execution command of a manuscript including a mono document and a job distribution command for quickly processing a job are input, the first image forming apparatus 100-1 generates mono scan data by scanning the manuscript.

Also, the first image forming apparatus 100-1 may search for the second image forming apparatus 100-2 supporting a mono printing task on the network and match with the second image forming apparatus 100-2 to constitute the virtual device 1.

In general, a scan speed of a scanner is faster than a printing speed of a printing unit. Therefore, if a copy job is performed (or a scan task and a printing task are combined), the scan task is quickly completed, but the printing task takes a long time, and thus user waiting may occur. The user waiting increases in proportion to an amount of the manuscript.

In order to reduce such waiting, if the mono scan data is generated, the first image forming apparatus 100-1 may directly process a mono printing task of some of mono scan data and request the second image forming apparatus 100-2 to process a mono printing task of other mono scan data. Therefore, a time taken for a whole copy job may be reduced more than an existing method by reducing a time taken for a printing task of a mono scan image.

The first image forming apparatus 100 has been described above as the mono copier. However, even if the first image forming apparatus 100-1 is a scanner supporting merely a scan task, the job may be distributed by using the second image forming apparatus 100-2 or the third image forming apparatus 100-3.

For example, the first image forming apparatus 100-1 may generate a scan image by scanning a manuscript and request the second image forming apparatus 100-2 to process a mono printing task of a mono scan image or request the third image forming apparatus 100-3 to process a color printing task of a color scan image. Therefore, the first image forming apparatus 100-1 supports merely a scan task but may use the second image forming apparatus 100-2 or the third image forming apparatus 100-3 to operate as supporting a copy task.

As described above, the first image forming apparatus 100-1 may execute a task unsupported in the first image forming apparatus 100-1 by distributing a plurality of tasks constituting one job by using the other image forming apparatuses 100-2 and 100-3 connected to the network. Therefore, a task of the first image forming apparatus 100-1 may be extended.

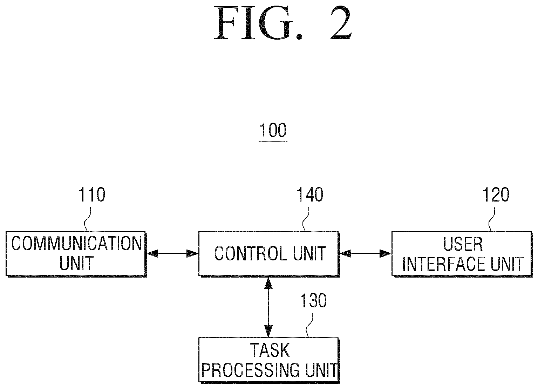

FIG. 2 is a block diagram illustrating a detailed configuration of the image forming apparatus of FIG. 1.

The image forming apparatus 100 shown in FIG. 2 includes a communication unit 110, a user interface unit 120, a task processing unit 130, and a control unit 140. The image forming apparatus 100 shown in FIG. 2 may be one of the first, second, and third image forming apparatuses 100-1, 100-2, and 100-3 shown in FIG. 1.

The communication unit 110 communicates with a plurality of image forming apparatuses that are connected to one another through a wire and/or wireless network.

The user interface unit 120 displays a UI screen for inputting a user command. In detail, the user interface unit 120 may include an object corresponding to a virtual device, display a UI screen for inputting a job execution command, and receive various types of user commands, such as a job distribution command, a task option setting command, and the like, associated with the exemplary embodiment of the present invention. The user interface unit 120 may be realized as one apparatus having all of display and input functions like a touch screen or may be realized by combining an input device such as a keyboard and a mouse and a display apparatus such as a monitor.

The task processing unit 130 performs at least one task supported by the image forming apparatus 100. In detail, the task processing unit 130 may include at least one selected from a scanner, a printing unit (or an image forming unit), and a fax unit for sending and receiving a fax.

Also, if the image forming apparatus 100 is an MFP, the task processing unit 130 may include all of elements described above. Also, if the image forming apparatus 100 executes a job such as scan-to-email, scan-to-fax, scan-to-PC, or the like, the task processing unit 130 may include an image processing unit for converting a scan image into a PDF file, an e-book format, or the like and may further include an email transmission unit or a server transmission unit, or the like.

The control unit 140 controls an overall operation of the image forming apparatus 100.

If a job execution command is input through the user interface unit 120, the control unit 140 determines whether to execute a plurality of tasks constituting a job according to the job execution command. If the plurality of tasks are executable, the control unit 140 controls the task processing unit 130 to process the plurality of tasks constituting the job.

For example, if the image forming apparatus 100 is a mono copier, and a copy job execution command of a mono manuscript is input, the control unit 140 may scan the mono manuscript by using the scanner included in the task processing unit 130 and control the printing unit included in the task processing unit 130 to perform mono printing with respect to a mono scan image.

On the contrary, if at least some of the plurality of tasks are inexecutable, the control unit 140 requests apparatus information from a plurality of image forming apparatuses that are connected to one another through a wire and/or wireless network.

Here, the apparatus information may include an apparatus name of an image forming apparatus, address information (an IP address, MAC information, or the like, e.g., information necessary for connection to the image forming apparatus), task information (information supported by the image forming apparatus such as whether color printing is possible, whether scanning is possible, or the like), and state information (whether a current job is possible, whether an error occurs, a job progress state, or the like).

The control unit 140 may check tasks, which are respectively supported by a plurality of image forming apparatuses, by using the apparatus information and determine usable states of the tasks. Therefore, the control unit 140 may check which apparatus supports at least some tasks inexecutable in the image forming apparatus 100 and whether the apparatus is capable of executing a task supporting at least some tasks.

If another image forming apparatus capable of executing at least some tasks inexecutable in the image forming apparatus is searched for according to the above-described operation, the control unit 140 constitutes the image forming apparatus 100 and the searched another image forming apparatus as a virtual device.

If the image forming apparatus 100 operates as a subject that searches for another image forming apparatus and constitutes a virtual device as described above, the image forming apparatus 100 may be a master device controlling an operation of the other image forming apparatus.

The control unit 140 processes at least one first task among a plurality of tasks by using the task processing unit 130 and requests other image forming apparatus constituting a virtual device along with the image forming apparatus 100 to process at least one second task among the plurality of tasks. Therefore, the control unit 140 may process a job unsupportable in the image forming apparatus 100 by distributing a job by using the image forming apparatus 100 and the other image forming apparatus.

For example, if the image forming apparatus 100 is a mono copier, and a copy job execution command of a manuscript including a mono document and a color document is input, the control unit 140 may generate a mono scan image and a color scan image of the manuscript by using the scanner included in the task processing unit 130.

Since the image forming apparatus 100 does not support color printing, the control unit 140 may search a plurality of image forming apparatuses for other image forming apparatus that supports color printing and enables current color printing.

If the other image forming apparatus that supports the color printing and enables the current color printing is searched for, the control unit 140 may match the image forming apparatus 100 with the searched other image forming apparats to constitute a virtual device. The virtual device includes the image forming apparatus 100, which is a mono copier, and other image forming apparatus, which enables color printing, so as to operate as a color copier.

If a plurality of other image forming apparatuses that support color printing and enable current color printing are searched for, the control unit 140 may automatically select at least one other image forming apparatus among the plurality of image forming apparatuses based on a preset priority criterion. Here, the present priority criterion may be job execution cost, a job execution speed, a distance between apparatuses, a distance between an apparatus and a user, or the like. An exemplary embodiment associated with this will be described in detail as follows.

The control unit 140 may control the task processing unit 130 to process mono printing of a mono scan image and request other image forming apparatus to process color printing of a color scan image. Therefore, although the image forming apparatus 100 does not support color printing, the control unit 140 may operate as an apparatus supporting color printing by using other image forming apparatus.

If a job execution command and a job distribution command for quick processing of a job are input through the user interface unit 120, the control unit 140 may check tasks respectively supported by a plurality of image forming apparatuses by using apparatus information of the plurality of image forming apparatuses and usable states of the tasks. In this case, the control unit 140 may select other image forming apparatus capable of supporting the same at least one task as the image forming apparatus 100.

Also, the control unit 140 may control other image forming apparatus to process at least some tasks by requesting the selected other image forming apparatus to process at least some tasks among a plurality of tasks.

For example, in order to quickly process a copy job of a mono manuscript, the control unit 140 may divide a mono scan image of the mono manuscript so as to enable the task processing unit 130 to process printing of at least a part and request other image forming apparatus constituting a virtual device along with the image forming apparatus 100 to process printing of the other part. Therefore, a time taken for a whole copy job may be reduced more than an existing method by reducing a time taken for a printing task of the mono scan image.

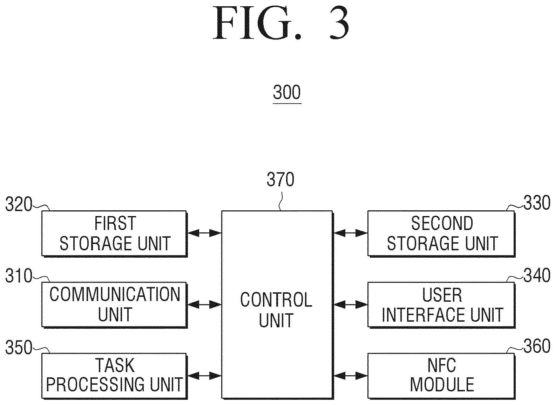

FIG. 3 is a block diagram illustrating a configuration of an image forming apparatus according to another exemplary embodiment of the present invention. An image forming apparatus 300 shown in FIG. 3 includes a communication unit 310, a first storage unit 320, a second storage unit 330, a user interface unit 340, a task processing unit 350, an NFC module 360, and a control unit 370.

The communication unit 310 communicates with a plurality of image forming apparatuses that are connected to one another through a wire/wireless network. Here, the wire/wireless network may be a Local Area Network (LAN) and an internet network or may be a Universal Serial Bus (USB) port and a communication network through a wireless module. Here, the wireless module may be WiFi, WiFi Direct, Near Field Communication (NFC), Bluetooth, or the like.

The first storage unit 320 stores various types of programs for performing an operation of the image forming apparatus 300 and stores various types of pieces of information associated with the image forming apparatus 300.

The second storage unit 330 stores position information of a user pre-input by a manager or the user, position information of an image forming apparatus, and the like.

The first storage unit 320 and the second storage unit 330 may be hardware memories that are physically separated or may be storage spaces into which the same memory is divided.

The a user interface unit 340 displays a UI for controlling the operation of the image forming apparatus 300. The user may input a control command for controlling a job execution operation of the image forming apparatus 300 through a displayed UI screen. Here, the a user interface unit 340 may receive copying, faxing, scan-to-email, scan-to-server, or a selection of a device setting change task performable in the image forming apparatus 300 and an option of a corresponding function through a displayed UI.

Merely copying, faxing, scan-to-email, scan-to-sever, or the selection of the device setting change function has been described above as a function performable in the image forming apparatus 300. However, it will be obvious that another function supported by the image forming apparatus 300 except the above-described function may also be applied.

The task processing unit 350 performs at least one task supported by the image forming apparatus 300. In detail, the task processing unit 350 may include at least one selected from a scanner, a printing unit (or an image forming unit), and a fax unit for sending and receiving a fax.

Also, if the image forming apparatus 300 is an MFP, the task processing unit 350 may include all of the above-described elements. In addition, if the image forming apparatus 200 executes a job such as scan-to-email, scan-to-fax, scan-to-PC, or the like, the task processing unit 350 may include an image processing unit for converting a scan image into a PDF file, an e-book format, or the like and may further include an email transmission unit, a server transmission unit, or the like.

If an ID card, a mobile device, accessories, or the like that includes an NFC chip (not shown) and is held by the user is tagged, the NFC module 360 extracts information from the NFC chip.

The control unit 370 controls an overall operation of the image forming apparatus 300.

If a job execution command is input through the a user interface unit 340, the control unit 370 determines whether to execute a plurality of tasks constituting a job according to the job execution command. If the plurality of tasks are executed, the control unit 370 controls the task processing unit 350 to process the plurality of tasks constituting the job.

If at least some tasks among the plurality of tasks are inexecutable, the control unit 370 may select at least one image forming apparatuses capable of executing the at least some tasks among a plurality of image forming apparatuses connected through a wire/wireless network and match the selected at least one image forming apparatus to generate a virtual device. If the virtual device is generated as described above, the control unit 370 may store information about at least one other image forming apparatus constituting a virtual device in the first storage unit 320.

As described above, constituting of a virtual device may be applied if there is the small number of image forming apparatuses. In other words, if there are dozens of other image forming apparatuses connectable to the image forming apparatus 300, it may be difficult to check states of a plurality of other image forming apparatuses and to bring an output result. Therefore, there may be dozens of image forming apparatuses included in one virtual device.

Hereinafter, methods of generating a virtual device according to various exemplary embodiments of the present invention will be described.

First, the control unit 370 searches for an access point that the image forming apparatus 300 may access. In this case, the access point may be searched for according to a method of receiving a signal from an Access Point (AP) (not shown) positioned around the image forming apparatus 300.

Also, the control unit 370 requests access point information from a plurality of other image forming apparatuses that are connectable and controls the communication unit 310 to receive the access point information from the plurality of other image forming apparatuses.

The control unit 370 may search for other image forming apparatus adjacent to the image forming apparatus 300 by comparing the access point that the image forming apparatus 300 may access with the access point information received from the plurality of other image forming apparatuses.

In detail, the control unit 370 may compare access point information of the image forming apparatus 300 with the access point information received from the plurality of other image forming apparatuses to determine that overlapping access points are adjacent to the image forming apparatus 300 as there are many overlapping access points.

If the image forming apparatus 300 is connected to AP1, AP2, and AP3 and receive access point information including AP1, AP2, and AP3 from other image forming apparatus, the control unit 370 may determine that the other image forming apparatus is very adjacent to the image forming apparatus 300.

Alternatively, if access point information including AP1 and AP2 is received from two other image forming apparatuses when the image forming apparatus 100-1 is connected to AP1, AP2, and AP3, the control unit 370 may search for an image forming apparatus more adjacent to the current image forming apparatus 100-1 among two other image forming apparatuses 100-2 and 100-3 by using signal strength information of AP1 and AP2. Here, signal strength information of an access point may be received along with access point information.

Secondly, the control unit 370 may select other image forming apparatus positioned in a shortest distance from the user among a plurality of image forming apparatuses based on a distance between the image forming apparatus and a user position and automatically match the image forming apparatus 300 with the other image forming apparatus to generate a virtual device.

The second storage unit 330 stores information of other image forming apparatus adjacent to a user position and position information of the other image forming apparatus. Therefore, if user identification information is input, the control unit 370 may extract the information of the other image forming apparatus adjacent to the user position and the position information of the other image forming apparatus by using the user identification information.

Here, the user identification information may be input by directly inputting a user ID and passwords through the a user interface unit 340 by the user. Alternatively, if an NFC chip embedded in an ID card, a mobile device, accessories, or the like possessed by the user is tagged on the NFC module 360, the control unit 370 may acquire the user ID through the NFC module 360.

The control unit 370 may select at least one other image forming apparatuses adjacent to the user position from the second storage unit 330 based on the user identification information. Therefore, the control unit 370 may automatically match the selected at least one other image forming apparatuses with the image forming apparatus 300 to generate a virtual device.

Thirdly, the control unit 370 may automatically select at least one other image forming apparatus among a plurality of image forming apparatuses based on a preset priority criterion and automatically match the selected at least one other image forming apparatuse with the image forming apparatus 300 to generate a virtual device.

Here, the preset priority criterion may be at least one selected from job execution cost, a job execution speed, a distance between apparatuses, and a distance between an apparatus and a user and may be an item that is to be preferentially considered when selecting an apparatus for constituting a virtual device.

The control unit 370 requests specification information from a plurality of image forming apparatuses and receive the specification information from the plurality of image forming apparatuses. Here, the specification information may be information about printing execution speeds of the plurality of image forming apparatuses, printing cost per one sheet, and distances between the plurality of image forming apparatuses and the image forming apparatus 300.

The control unit 370 may generate apparatus order information according to respective criterions by using pieces of the specification information received from the plurality of image forming apparatuses. The apparatus order information indicates order information about the plurality of image forming apparatuses respectively based on the printing speeds, the printing cost per one sheet, and the distances between the plurality of image forming apparatuses and the image forming apparatus 300.

For example, if a preset priority criterion is a printing speed, the control unit 370 may select other image forming apparatus having a fastest printing speed when selecting other image forming apparatus that is to constitute a virtual device and automatically match the image forming apparatus 300 with the selected other image forming apparatus to generate a virtual device.

If the image forming apparatus 300 automatically matches with at least one other image forming apparatus to generate a virtual device as described above, the control unit 370 may display various types of UI screens associated with an operation of the virtual device.

If the virtual device is generated, the control unit 370 may control the a user interface unit 340 to display a UI screen associated with the virtual device.

In this case, in order to display a UI screen of other image forming apparatus, the control unit 370 may request UI option information from the other image forming constituting the virtual device with the image forming apparatus 300. The UI option information may be option information constituting a UI of other image forming apparatus.

For example, if other image forming apparatus is a color printer, the other image forming apparatus may store various types of option information constituting a UI in association with color printing.

If UI option information is received from other image forming apparatus, the control unit 370 may apply the UI option information to a UI layout of the image forming apparatus 300. In detail, the UI layout of the image forming apparatus 300 may be combined with scan option information, printing option information, scan-to-email option information, scan-to-fax option information, scan-to-PC option information, or the like of other image forming apparatus.

Therefore, the a user interface unit 340 may display a new UI screen where a UI screen of the image forming apparatus 300 is combined with a UI screen of other image forming apparatus. In other words, a UI screen of a virtual device may be displayed.

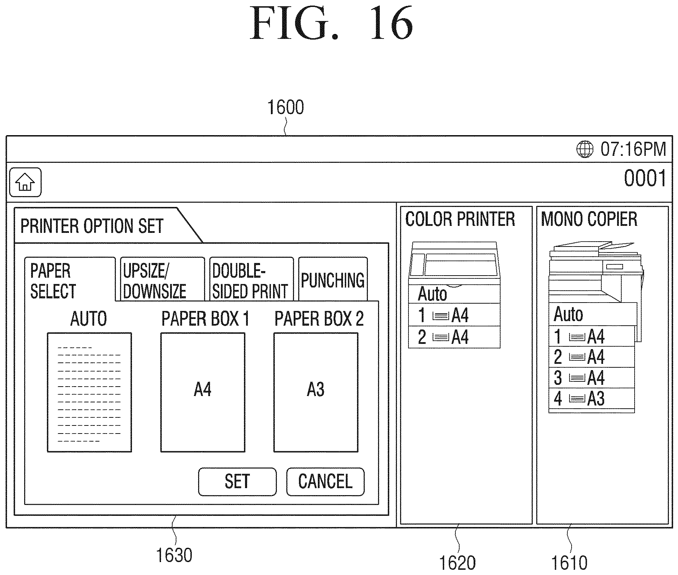

As described above, the control unit 370 may display a new UI screen of a virtual device but may control a UI screen to display UI screens of the image forming apparatus 300 and other image forming apparatus constituting the virtual device. This will be described in detail with reference to FIGS. 16 through 18.

The image forming apparatus 300 may match with at least one image forming apparatus to generate one virtual device but may respectively match with a plurality of image forming apparatuses to generate a plurality of virtual devices.

In this case, a UI screen for setting operations of the plurality of virtual devices may be needed. For this, the control unit 370 may control the a user interface unit 340 to display a UI screen including a plurality of objects respectively corresponding to the plurality of virtual devices.

If one object is selected from the UI screen including the plurality of objects, the control unit 370 may control the a user interface unit 340 to display a UI screen including a menu provided by a virtual device corresponding to the selected object. For example, if the virtual device is a color copier, the control unit 370 may display a copy menu, a printing menu, a scan-to-email menu, a scan-to-fax menu, or a scan-to-PC menu that is executable through the UI screen by the color copier.

Also, if one menu is selected from a UI screen including menus provided by a virtual device as described above, the control unit 370 may control the a user interface unit 340 to display a UI capable of setting a function or an option associated with the selected menu.

For example, if a printing menu is selected from a UI screen, the control unit 370 may display a UI screen for selecting functions or options applicable when performing printing such as color printing, mono printing, double-sided printing, single-sided printing, N-Up printing, punching, stapler, or the like.

If an error occurs in other image forming apparatus when distributing a plurality of tasks constituting one job by using a virtual device, the control unit 370 may control the a user interface unit 340 to display a UI screen notifying that the error occurs.

Also, the control unit 370 may display a list of other image forming apparatuses performing an operation of other image forming apparatus, where an error occurs, in replacement of the other image forming apparatus. Therefore, the user may resume a job by selecting other image forming apparatus on a list according to a drag-and-drop method.

If a job is distributed by using a virtual device, the control unit 370 may control an output method of a printed result.

First, the task processing unit 350 may process at least one first task among a plurality of tasks constituting one job. Also, if a printed result is output according to the processing of the first task, a printing output direction may be changed based on continuity of the printed result.

In detail, if the printed result has discontinuous page information, the task processing unit 350 may make a printing output direction of a part of the printed result, where page information is discontinuous, opposite to a right previous output direction.

For example, if a first printed result having pages from 1 to 10 and a second printed result having pages from 21 to 30 are output, page information of the first printed result and the second printed result may be discontinuous. In other words, printing output directions of a last page of the first printed result and a first page of the second printed result may be opposite to an output direction of the first printed result.

Here, page information of a printed result may be automatically recognized by the task processing unit 350. In detail, a scanning unit included in the task processing unit 340 may recognize page information according to the number of times a manuscript being scanned in a process of scanning the manuscript.

Alternatively, when the scanning unit included in the task processing unit 350 scans the manuscript, page information of each page may be recognized through an optical character recognition unit included in the scanning unit.

If a printing output direction a part of a printed result where page information is discontinuous is changed based on page information as described above, the user does not need to check the printed result in order to find a discontinuous part.

Also, an output method of a printed result as described above may be equally applied even if another image forming apparatus requests at least one another image forming apparatus to process at least one task associated with a job execution command input.

Secondly, if a plurality of other image forming apparatuses match with the virtual device, the task processing unit 350 may differently adjust a size of a task, which is to be processed by the plurality of other image forming apparatuses, based on distances between the plurality of other image forming apparatuses and the image forming apparatus 300. Here, the size of the task refers to an amount that is to perform the task, i.e., may be the number of pages to be printed in case of a printing task.

In detail, the control unit 370 adjusts a size of a first task of a plurality of tasks, which is to be processed by the image forming apparatus 300, to a minimum size. Also, as a plurality of image forming apparatuses are at a long distance from the image forming apparatus 300, the control unit 370 may increase a size of a task, which is to be processed by the plurality of image forming apparatuses.

Here, a plurality of image forming apparatuses constituting a virtual device along with the image forming apparatus 300 may be positioned along a moving line of a user who inputs a job execution command. Therefore, the user may collect printed results respectively output from a plurality of image forming apparatuses with moving from the image forming apparatus 300 to a final destination.

If a virtual device is generated, the control unit 370 may transmit user identification, information about the virtual device, and position information of an image forming apparatus to a server apparatus (not shown).

Here, the server apparatus is a server apparatus existing on a network to which the image forming apparatus 300 is connected and manages a virtual device generation history of the image forming apparatus 300.

The virtual device generation history may be information indicating when and where a particular user generates a virtual device and which options the user uses. Therefore, if the image forming apparatus 300 executes a job distribution by generating a virtual device, the control unit 370 may transmit user identification information generating a virtual device, information about the virtual device, and position information of an image forming apparatus to a pre-registered server apparatus. As a result, the server apparatus may generate a virtual device generation history by accumulating and registering the information about the virtual device and the position information of the image forming apparatus according to user identification information.

If user identification information for calling a virtual device generation history is input onto a UI screen, the control unit 370 requests a virtual device generation history corresponding to the user identification information from a server apparatus. If the virtual device generation history is received from the server apparatus according to this request, the control unit 370 may control the a user interface unit 340 to display the virtual device generation history.

Also, if one of virtual device generation histories is selected from a UI screen, the control unit 370 may restore a virtual device based on virtual device information corresponding to the selected history. Here, the virtual device information may be information of an image forming apparatus matching to constitute a virtual device.

The control unit 370 may check at least one task supported by image forming apparatuses included in virtual device information and search for image forming apparatuses corresponding to the checked task on a network. Therefore, the control unit 370 may restore an existing virtual device, which is used by the user, by generating a virtual device equal or similar to a virtual device selected by the user. Here, if the virtual device is restored, option information applied to a virtual device selected on a UI screen may be restored together.

Therefore, the user may restore a virtual device and option information one by one whenever a place or a position is changed, by calling a virtual device generation history of the user from a server apparatus without needing to constitute a virtual device and option information to be applied to the virtual device.

As described above, the image forming apparatus 300 according to the present exemplary embodiment may be constituted as a virtual device along with at least one other image forming apparatuses connected on the network so as to execute a job with respect to a task that is not supported by the image forming apparatus 300.

Also, a job may be more quickly executed by distributing a job execution command of a task supportable by the image forming apparatus 300 by using image forming apparatuses constituting a virtual device.

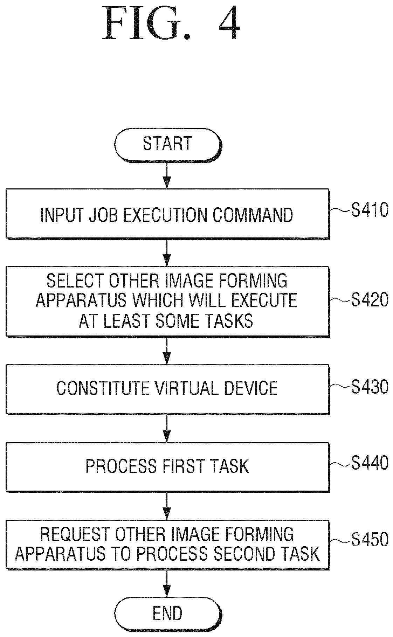

FIG. 4 is a flowchart illustrating an image forming method according to an exemplary embodiment of the present invention. The image forming method shown in FIG. 4 may be performed by the image forming apparatus 100 shown in FIG. 2.

In operation S410, the image forming apparatus 100 generates a virtual device by matching at least one other image forming apparatus among a plurality of image forming apparatuses with the image forming apparatus. The virtual device may be a virtual image forming apparatus that supports all of tasks respectively executable in the image forming apparatus 100 and other image forming apparatus. For example, if the image forming apparatus 100 is a mono copier, and the other image forming apparatus is a color printer, a virtual device may be a color copier capable of executing a scan task, a mono printing task, and a color printing task. As described above, the image forming apparatus 100 may match with other image forming apparatus to constitute a virtual device so as to extend and provide a task unsupported in the image forming apparatus 100.

In operation S420, the image forming apparatus 100 displays a UI screen including an object corresponding to the virtual device. When selecting the virtual device, a virtual device, which includes an apparatus capable of performing at least some of a plurality of tasks unsupported in the image forming apparatus 100, may be selected. However, the present exemplary embodiment is not limited thereto, and if a job distribution command is input, other image forming apparatus may be an apparatus capable of performing at least some tasks unsupported in the image forming apparatus 100.

If the virtual device is selected through the user interface unit 120, and the job execution command is input, the image forming apparatus processes at least one first task of the plurality of tasks constituting one job in operation S430. In operation S440, the image forming apparatus 100 distributes the job by requesting at least one other image forming apparatus to process at least one second task of the plurality of tasks. In other words, the image forming apparatus 100 may directly process a first task of a plurality of tasks constituting a job and distribute the job by transmitting a second task to other image forming apparatus.

As described above, the image forming method according to the present exemplary embodiment may execute a task unsupported in the first image forming apparatus 100-1 by distributing a plurality of tasks constituting one job by using other image forming apparatuses 100-2 and 100-3 connected to the network, thereby extending a task of the first image forming apparatus 100-1. The image forming method as illustrated in FIG. 4 may be executed in an image forming apparatus having the configuration of FIG. 2 or in image forming apparatuses having other types of configurations.

Also, the image forming method as described above may be embodied as a program (or an application) including a computer executable algorithm, and the program may be stored and provided on a non-transitory computer readable medium.

The non-transitory computer readable medium is a medium which does not store data temporarily such as a register, cash, and memory but stores data semi-permanently and is readable by devices. More specifically, the aforementioned applications or programs may be stored in the non-transitory computer readable media such as compact disks (CDs), digital video disks (DVDs), hard disks, Blu-ray disks, universal serial buses (USBs), memory cards, and read-only memory (ROM).

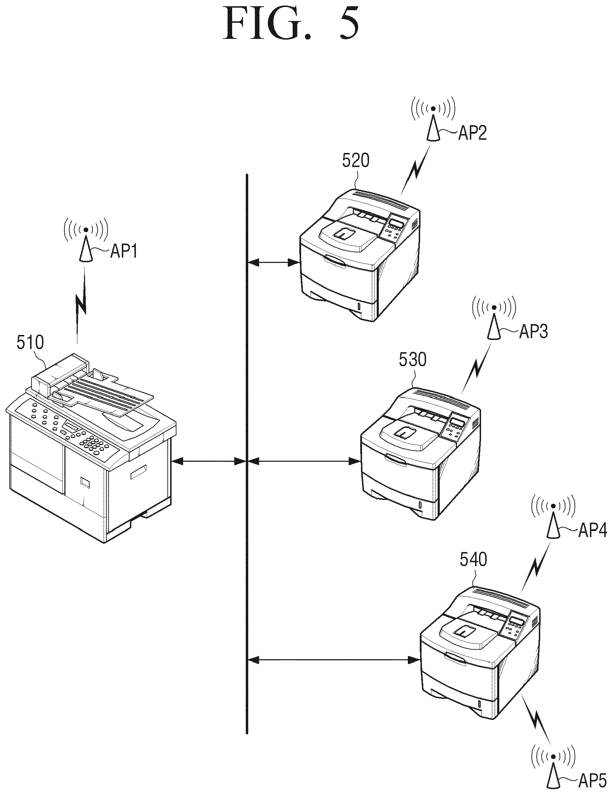

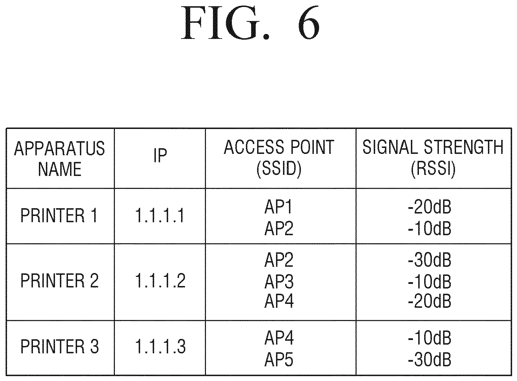

FIGS. 5 and 6 are views illustrating a method of constituting a virtual device, according to an exemplary embodiment of the present invention. An image forming system shown in FIG. 5 includes first, second, third, and fourth image forming apparatuses 510, 520, 530, and 540.

If a virtual device is constituted by using the first image forming apparatus 510, a user may request access point information adjacent to the second, third, and fourth image forming apparatuses 520, 530, and 540 and select an image forming apparatus for constituting a virtual device based on adjacent access point information received from the second, third, and fourth image forming apparatuses 520, 530, and 540.

In detail, the first image forming apparatus 510 searches for an access point that is pre-accessed or accessible. Also, the first image forming apparatus 510 may select an image forming apparatus most adjacent to the first image forming apparatus 510 by comparing the searched access point with the adjacent access point information received form the second through fourth image forming apparatuses 520, 530, and 540.

FIG. 6 is a view illustrating an example of adjacent access point information received from the second through fourth image forming apparatuses 520, 530, and 540.

The first image forming apparatus 510 stores the adjacent access point information received from the second through fourth image forming apparatuses 520, 530, and 540. Here, the access point information may be a Service Set Identifier (SSID) or Received Signal Strength indication (RSSI) as shown and may further include a Basic Set Identifier (BSID) although not shown in the drawing.

Referring to FIG. 6, the second image forming apparatus 520 is connected to AP1 and AP2 through printer 1, and the third image forming apparatus 530 is connected to AP2, AP3, and AP4 through printer 2. Also, the fourth image forming apparatus 540 is connected to AP4 and AP5 through printer 3.

The first image forming apparatus 510 compares an access point thereof with adjacent access point information as described above. When it is considered that the first image forming apparatus 510 is connectable to AP1 and AP2, the first image forming apparatus 510 may be connected to the same access point along with the second image forming apparatus 520 corresponding to the printer 1. Therefore, the first image forming apparatus 510 may select the second image forming apparatus 520 as most adjacent apparatus thereof to match with the second image forming apparatus 520 so as to constitute a virtual device. In this case, the first image forming apparatus may match with the second image forming apparatus 520 by using IP information of the second image forming apparatus 520.

If there are two or more apparatuses having the same access point information as the first image forming apparatus 510, an apparatus more adjacent to the first image forming apparatus 510 may be selected by using a signal strength of an access point.

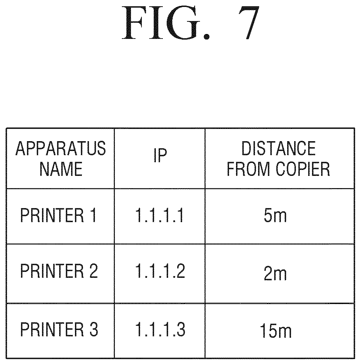

FIG. 7 is a view illustrating a method of constituting a virtual device, according to another exemplary embodiment of the present invention. Referring to FIG. 7, a copier may select other image forming apparatus for constituting a virtual device based on distance information from printer 1, printer 2, and printer 3 connected through a wire/wireless network.

In detail, when installing a copier, an installation engineer or a user may store distance information between the copier and printer 1, printer 2, and printer 3 positioned around the copier.

If printer 4 is additionally installed around the copier, the installation engineer or the user may additionally store distance information between the copier and the printer 4.

With reference to distance information from three printers positioned around a copier, the copier may recognize that the printer 2 is at a distance of 2 m from the copier and compare the printer 2 with the first printer 1 or the printer 3 to recognize that the printer 2 is most adjacent to the copier. Therefore, the copier may match with the printer 2 to constitute a virtual device by selecting the printer 2 as the most adjacent apparatus to the copier. In this case, the copier may match with the printer 2 by using IP information of the printer 2.

As described above, the method of constituting the virtual device according to the another exemplary embodiment may generate a virtual device by using the printer 2 positioned most adjacent to a copier that receives a job execution command. Therefore, if the copier distributes a job by using the printer 2, a time taken for finding an output result of a task processed in the printer 2 may be reduced.

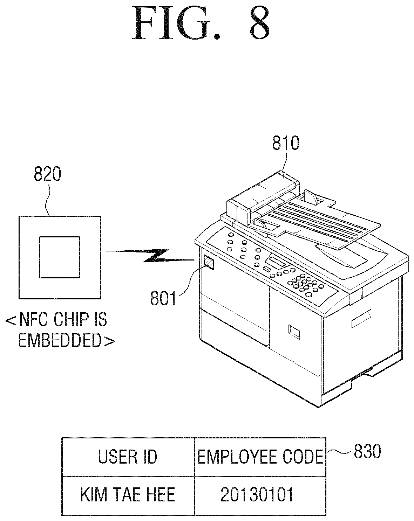

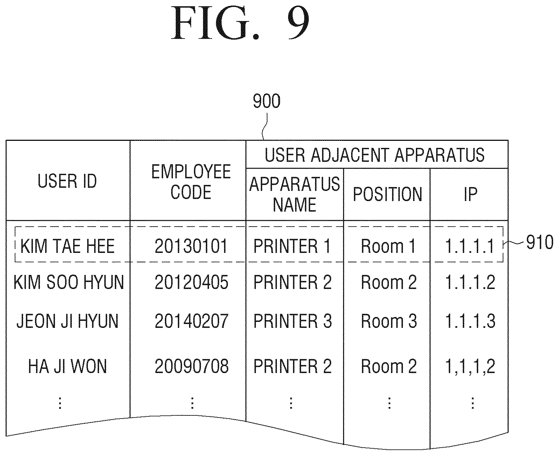

FIGS. 8 and 9 are views illustrating a method of constituting a virtual device, according to another exemplary embodiment. Referring to FIG. 8, an image forming apparatus 810 may select other image forming apparatus for constituting a virtual device based on user position information.

The image forming apparatus 810 includes an NFC module, i.e., an NFC reader 801. If a user tags an employee card including an NFC chip onto the NFC reader 801, the NFC reader 801 reads user information 830 stored in the NFC chip. Here, the user information 830 may be a user ID (name) and an employee code. However, the user information 830 is not limited thereto and may further include other pieces of information associated with the user.

The image forming apparatus 810 may select an image forming apparatus for constituting a virtual device based on the user information read by the NFC reader 801. In detail, the image forming apparatus 810 stores other adjacent apparatus information 900 as shown in FIG. 9 in each user position. Here, the adjacent apparatus information 900 is information pre-stored by the user and may be information shared with other image forming apparatus connected on a wire/wireless network.

The adjacent apparatus information 900 includes employee codes of a plurality of user IDs and user adjacent apparatuses (apparatus names, positions, and IP information). Therefore, the image forming apparatus 800 may check an apparatus most adjacent to the user by using adjacent apparatus information 910 corresponding to the user information read by the NFC reader 801.

Therefore, the image forming apparatus 910 may match with printer 1 to constitute a virtual device by selecting the printer 1 as an apparatus most adjacent to the user. In this case, the first image forming apparatus may match with the second image forming apparatus 520 by using IP information of the second image forming apparatus 520.

As described above, according to the method of constituting the virtual device according to the present exemplary embodiment, the image forming apparatus 910 may generate a virtual device by using printer 2 positioned most adjacent to the user. Therefore, if the copier distributes a job by using the printer 2, a time taken for finding an output result of a task processed in the printer 2 may be reduced.

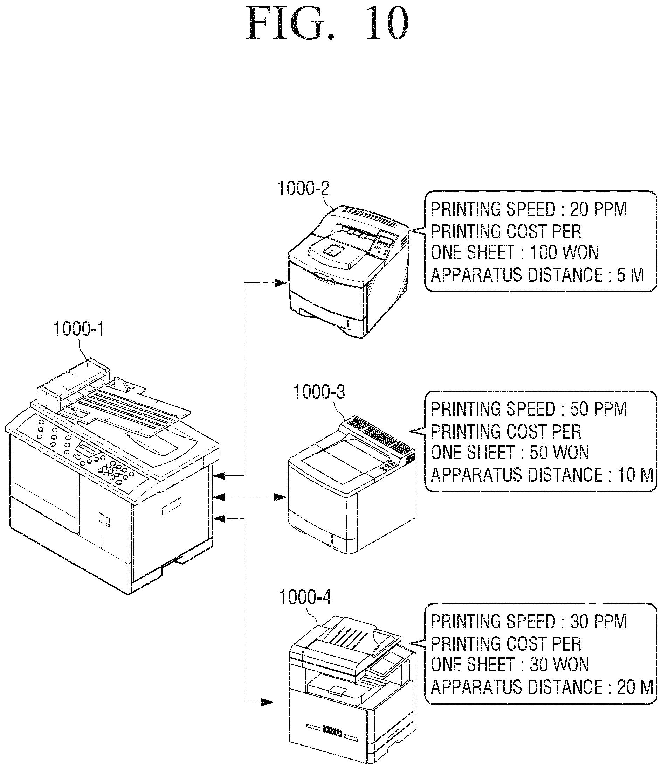

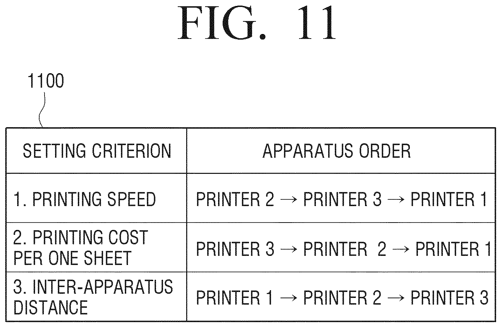

FIGS. 10 and 11 are views illustrating a method of constituting a virtual device, according to another exemplary embodiment.

Referring to FIG. 10, if a user constitutes a virtual device by using a first image forming apparatus 1000-1, the first image forming apparatus 1000-1 may automatically select at least one apparatus from second through fourth image forming apparatuses 100-2, 1000-3, and 1000-4 based on a preset priority criterion.

Here, the preset priority criterion may be an item that is to be preferentially considered when selecting an apparatus for constituting a virtual device based on at least one selected from job execution cost, a job execution speed, a distance between apparatuses, and a distance between a user and an apparatus.

The first image forming apparatus 1000-1 receives specification information from the second through fourth image forming apparatuses 1000-2, 1000-3, and 1000-4 by requesting the specification information from the second through fourth image forming apparatuses 1000-2, 1000-3, and 1000-4. Here, the specification information may be information about printing execution speeds of the second through fourth image forming apparatuses 1000-2, 1000-3, and 1000-4, printing cost per one sheet, and distances between the first image forming apparatus 1000-1 and the second through fourth image forming apparatuses 1000-2, 1000-3, and 1000-4.

In detail, the second image forming apparatus 100-2 is printer 1, has a printing speed of 20 ppm and printing cost of 100 won per one sheet, and is positioned at a distance of 5 m from the first image forming apparatus 1000-1.

Also, the third image forming apparatus 1000-3 is printer 2, has a printing speed of 50 ppm and printing cost of 50 won per one sheet, and is positioned at a distance of 10 m from the first image forming apparatus 1000-1.

In addition, the fourth image forming apparatus 1000-4 is printer 3, has a printing speed of 30 ppm and printing cost of 30 won per one sheet, and is positioned at a distance of 20 m from the first image forming apparatus 100-1.

The first image forming apparatus 1000-1 stores apparatus order information 1100 according to each priority criterion as shown in FIG. 11 by using specification information of the second through fourth image forming apparatuses 1000-2, 1000-3, and 1000-4.

The apparatus order information 1100 may have an order of printer 2 1000-3, printer 3 1000-4, and printer 1 1000-2 based on a printing speed and have an order of the printer 3 1000-4, the printer 2 1000-3, and the printer 1 1000-2 based on printing cost per one sheet. Also, the apparatus order information 1100 may have an order of the printer 1 1000-2, the printer 2 1000-3, and the printer 3 1000-4 based on a distance between apparatuses.

If a preset priority criterion set by a user is a printing speed, the first image forming apparatus 1000-1 may select an apparatus having the fastest printing speed when selecting an apparatus for constituting a virtual device. In other words, the printer 2 1000-3 may be selected based on the apparatus order information 1100 shown in FIG. 11.

If printing speeds of the printer 11000-2, the printer 2 1000-3, and the printer 3 are the same as 50 ppm, the first image forming apparatus 1000-1 may select the printer 3 1000-4 having low printing cost per one sheet, which is a next priority criterion of a printing speed, as an apparatus for constituting a virtual device.

Therefore, as the user sets a desired specification as a priority criterion, the first image forming apparatus 1000-1 may select an apparatus for constituting a virtual device from the printer 2 through printer 4 1000-2, 1000-3, and 1000-4 based on the priority criterion.

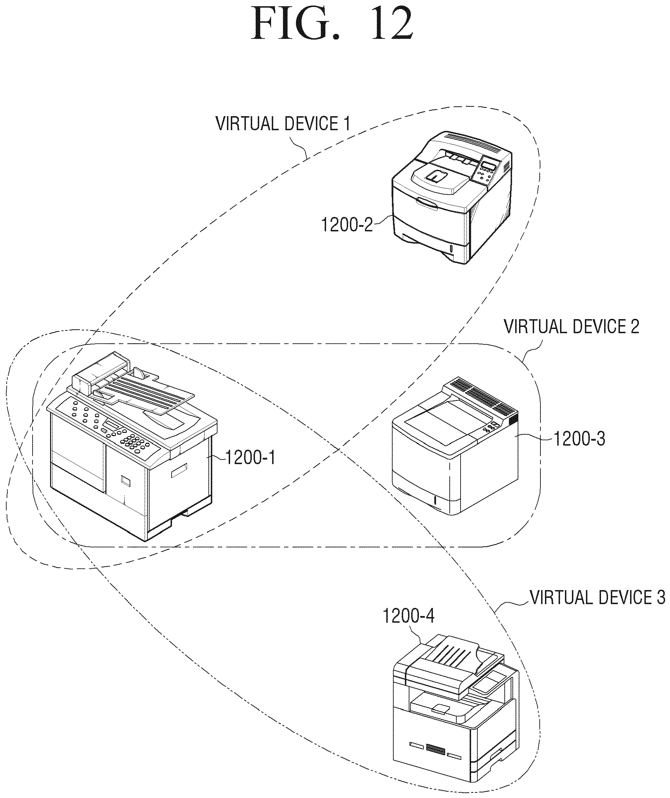

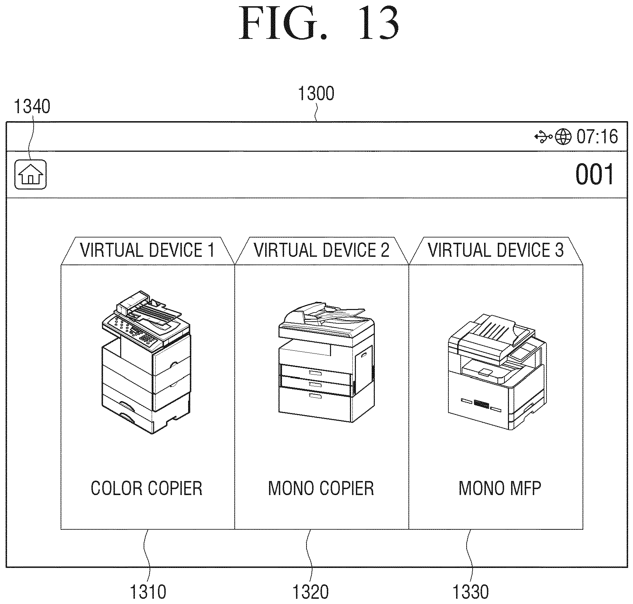

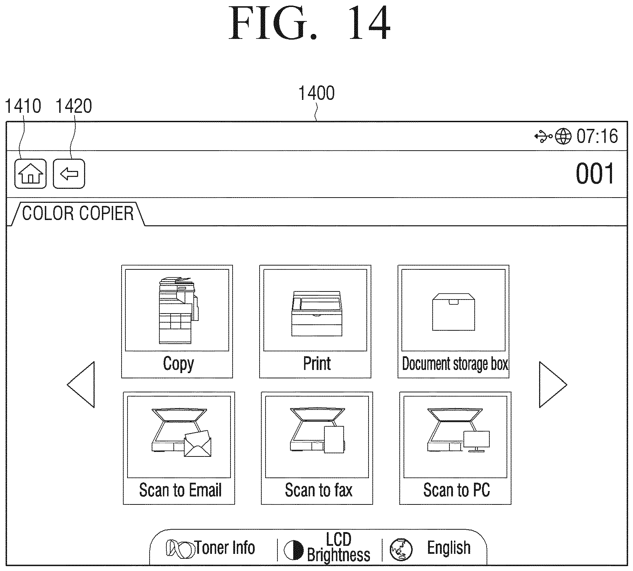

FIG. 12 is a view illustrating a method of constituting a virtual device for distributing a job. FIGS. 13 and 14 are views illustrating a UI screen for a virtual device, according to an exemplary embodiment.

Referring to FIG. 12, a first image forming apparatus 1200-1 may be a mono copier, a second image forming apparatus 1200-2 may be a color printer, a third image forming apparatus 1200-3 may be a mono printer, and a fourth image forming apparatus 1200-4 may be a mono fax.

If a user inputs a job distribution command (or a virtual device constitution command), the mono copier 1200-1 searches for connectable other image forming apparatuses, i.e., the color printer 1200-2, the mono printer 1200-3, and the mono fax 1200-4.

In detail, the mono copier 1200-1 requests apparatus information from the color printer 1200-2, the mono printer 1200-3, and the mono fax 1200-4 connected through a wire/wireless network.

Here, the apparatus information may be information about at least one task, i.e., a function, supported by each image forming apparatus. Also, the apparatus information may include current state information of each image forming apparatus.

The mono copier 1200-1 may check tasks respectively supported by the color printer 1200-2, the mono printer 1200-3, and the mono fax 1200-4 by using the apparatus information and determine usable states of the tasks.

The mono copier 1200-1 combines a task thereof with a task of the color printer 1200-2 and constitutes a virtual device 1 capable of performing the combined tasks. In other words, the mono copier 1200-1 may match with the color printer 1200-2 to constitute a virtual color copier.

Similarly to this, the mono copier 1200-1 may match with the mono printer 1200-3 to constitute a virtual device 2 and match with the mono fax 1200-4 to constitute a virtual device 3. Here, the virtual device 2 may be a mono copier, and the virtual device 3 may be a mono MFP.

Referring to FIG. 13, the mono copier 1200-1 displays a first UI screen 1300 for virtual devices 1, 2, and 3 constituted by the method shown in FIG. 12.

The first UI screen 1300 includes first through third objects 1310, 1320, and 1330 respectively corresponding to the virtual devices 1, 2, and 3. Here, the first through third objects 1310, 1320, and 1330 may have icon shapes respectively indicating the virtual devices 1, 2, and 3.

For example, the first object 1310 may have an icon shape corresponding to a color copier, the second object 1320 may have an icon shape corresponding to a mono copier, and the third object 1330 may have an icon shape corresponding to a mono MFP.

In order to more clearly indicate color printing tasks or mono printing tasks executed in the first through third objects 1310, 1320, and 1330, the first object 1310 corresponding to the color copier may be displayed in color, and the second and third objects 1320 and 1330 corresponding to the mono copier and the mono MFP may be displayed in black.

As shown in FIG. 13, since the first through third objects 1310, 1320, and 1330 are displayed in shapes corresponding to virtual devices 1, 2, and 3 constituted to distribute a job, the user may recognize the virtual devices 1, 2, and 3 as actual apparatuses.

For example, the user may execute various types of jobs by recognizing the virtual device including the mono copier 1200-1 and the color printer 1200-2 as an actually existing color copier.

Also, if not the virtual devices 1, 2, and 3 but a UI screen of the mono copier 1200-1 is to be displayed, the user may select a home button 1340 included in the first UI screen 1300.

If one object of the first through third objects 1310, 1320, and 1330 is selected on the first UI screen 1300, the mono copier 1200-1 displays a second UI screen including a menu provided from a virtual device corresponding to the corresponding object.

For example, if the first object 1310 corresponding to a color copier is selected on the first UI screen 1300, the mono copier 1200-1 displays a second UI screen 1400 as shown in FIG. 14.

The second UI screen 1400 may include menus such as copy, print, a document storage box, scan-to-email, scan-to-fax, scan-to-PC, and the like provided from a color copier.

If not a color copier but a UI screen of the mono copier 1200-1 is to be displayed, the user may select a home button 1410 included in the second UI screen 1400. Also, if the first UI screen 1300 is to be displayed, the user may select a back button 1420 included in the second UI screen 1400.

If one menu is selected on the second UI screen 1400, the mono copier 1200-1 displays a third UI screen capable of setting options corresponding to the selected menu.

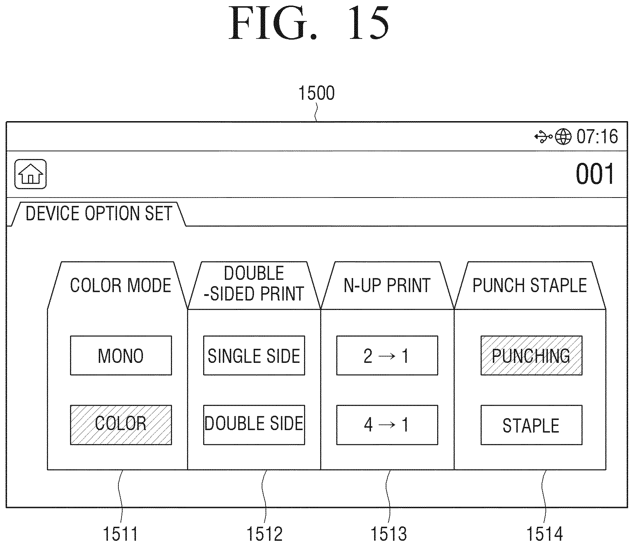

For example, if a printing menu is selected on the second UI screen 1400, the mono copier 1200-1 displays a third UI screen 1500 as shown in FIG. 15.

Referring to FIG. 15, the third UI screen 1500 is a screen for setting an option (or a function) associated with a printing menu provided from virtual device 1. With reference to the third UI screen 1500, the virtual device 1 may provide a color mode option 1511, a double-sided print option 1512, an N-Up option 1513, a punch/staple option 1514, and the like associated with the printing menu.

However, the virtual device 1 may display options, which are currently inexecutable by the virtual device 1 among various types of options associated with the printing menu, in inactivated states on the third UI screen 1500.

For example, if the virtual device 1 is not currently capable of performing a color option and a punching option, the virtual device 1 displays the color option and the punching option in inactivated states on the third UI screen 1500. Also, other options except these two options may be displayed in selectable activated states.

As described above, the virtual device 1 may determine options executable by the mono copier 1200-1 and the color printer 1200-2 constituting the virtual device and immediately display the options on the third UI screen 1500.

Therefore, the user may easily recognize executable options and inexecutable options by using the virtual device 1 through the third UI screen 1500.

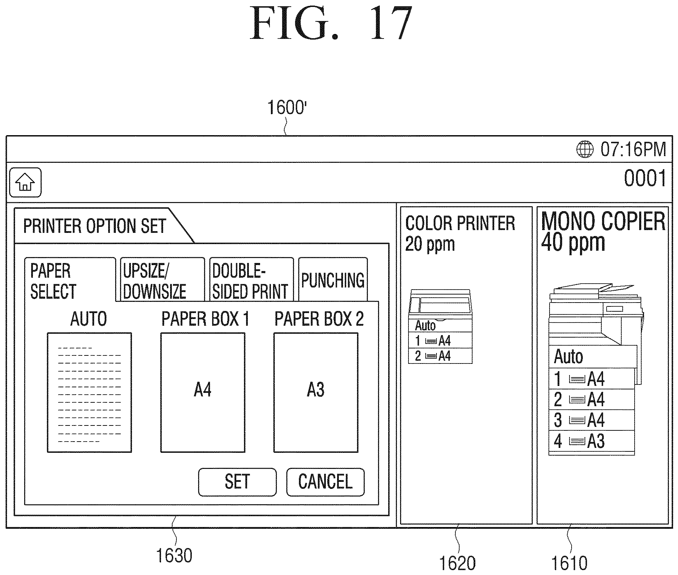

The mono copier 1200-1 has been described as displaying the first UI screen 1300 including objects of the virtual devices 1, 2, and 3 in FIGS. 13 through 15 but is not limited thereto. In detail, the mono copier 1200-1 may display a UI screen including objects of at least two apparatuses constituting the virtual devices 1, 2, and 3. This will be described in detail with reference to FIGS. 16 and 17 below.

FIGS. 16 and 17 are views illustrating a UI screen for a virtual device, according to another exemplary embodiment of the present invention.

If a mono copier matches with a color printer to constitute a virtual device such as a color copier, the mono copier may display a UI screen 1600.

The UI screen 1600 includes a first area 1610 and a second area 1620 respectively displaying a mono copier and a color printer constituting a virtual device. Also, if one of the first area 1610 and the second area 1620 is selected, the UI screen 1600 includes a third area 1630 displaying an option setting screen of an apparatus corresponding to the selected area.

If the first area 1610 is selected on the UI screen 1600, an option setting screen of the mono copier may be displayed in the third area 1630. If the second area 1620 is selected, an option setting screen of the color printer may be displayed in the third area 1630.

The UI screen 1600 individually or selectively displays option setting screens of the mono copier and the color printer constituting a virtual device. Therefore, if a user sets different options with respect to the mono copier and the color printer, the different options may be usefully used.

Referring to FIG. 17, a UI screen 1600' may display a printing speed and a printing color of the mono copier in the first area 1610 differently from the second area 1620 in order to more clearly display attributes of printing tasks executed in the mono copier and the color printer constituting a virtual device.

In other words, in order to display attributes of a mono copier capable of performing high-speed printing and color printing, texts of "mono copier" and "45 ppm" included in the first area 1610 may be displayed in a heavy and big mono writing style, and texts "color copier" and "20 ppm" included in the second area 1620 may be displayed in a small color writing style.

Therefore, the user may quickly recognize printing speeds and printing colors supported by the mono copier and the color printer through the first area 1610 and the second area 1620.

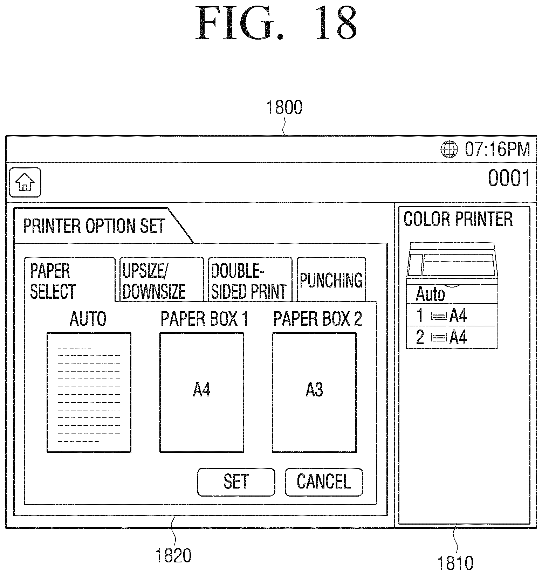

FIG. 18 is a view illustrating a UI screen for a virtual device, according to another exemplary embodiment.

If a mono copier matches a color printer to constitute a virtual device such as a color copier, the mono copier may display a UI screen 1800 for the color printer.

If the color printer is positioned at a long distance from the mono copier or the color printer includes a 2-line or 4-line UI, the user may experience inconvenience when setting various types of options of the color printer in the color printer.

Therefore, if UI option information is received in the color printer, and this UI option information is received, a mono printer may apply the UI option information to a UI layout of the mono printer. In detail, the UI layout of the mono printer may be combined with scan option information of the color printer, printing option information, scan-to-email option information, scan-to-fax option information, scan-to-PC option information, or the like.

A UI screen 1800 includes a first area 1810 displaying a color printer and a second area 1820 for setting an option of the color printer. Therefore, the user may set the option of the color printer through the UI screen 1800 displayed in the mono copier.

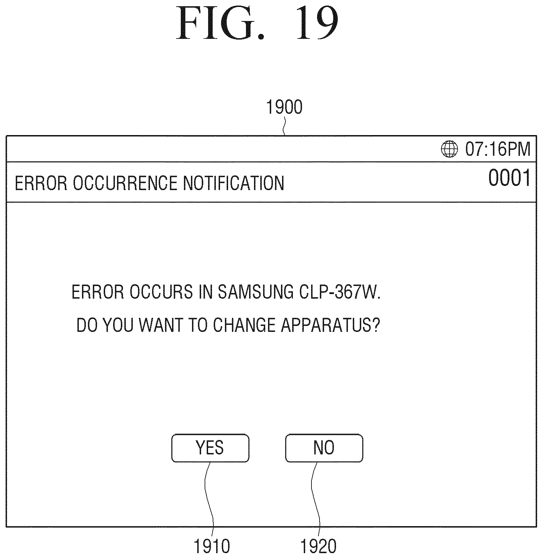

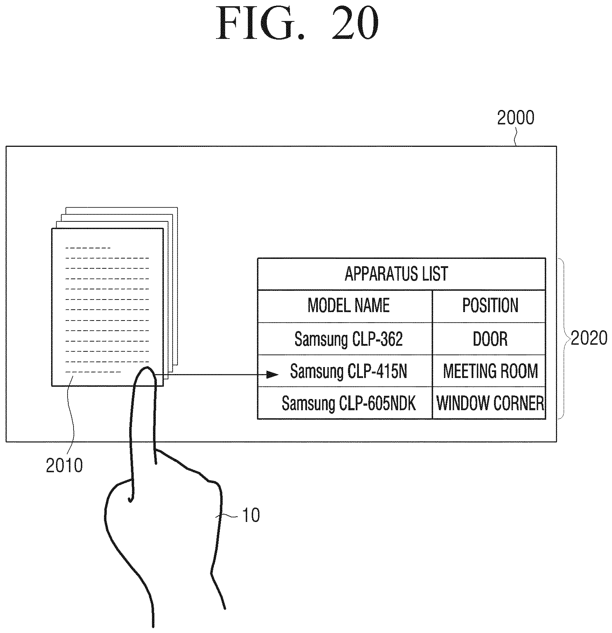

FIGS. 19 and 20 are views illustrating a UI screen according to an error occurrence.

According to various exemplary embodiments described above, if a virtual device is generated, an image forming apparatus distributes a plurality of tasks constituting one job.

If an error, such as a paper jam, no toner, or the like, occurs or a task is not normally transmitted to other image forming apparatus due to a communication problem when some of a plurality of tasks are being processed through the other image forming apparatus, the other image forming apparatus may transmit error occurrence information to an image forming apparatus.

Therefore, the image forming apparatus may display a first UI screen 1900 for notifying an error occurrence by using the error occurrence information.

The first UI screen 1900 shown in FIG. 19 includes a guide sentence "An error occurs in Samsung CLP637W. Do you want to change the apparatus?".

If the user selects "Yes" 1910 on the first UI screen 1900, the image forming apparatus displays a second UI screen 2000 shown in FIG. 20. On the contrary, if the user select "No" 1920 on the first UI screen 1900, the image forming apparatus stops an execution of a job.

The second UI screen 2000 may include a document icon 2010 for executing the job and may include an apparatus list 2020 for performing a subsequent job after the error occurs in "Samsung CLP-637W". Here, a plurality of image forming apparatuses included in the apparatus list 2020 are apparatuses for replacing and executing a job performed in existing "Samsung CLP-637W" and thus may be apparatuses executing the same task as existing "Samsung CLP-637W".

Also, the apparatus list 2020 may include a model name and a position of each image forming apparatus. However, the apparatus list 2020 is not limited thereto and thus may further include apparatus name, address information (IP information, MAC information, or the like, i.e., information necessary for connection to an image forming apparatus), task information (information about a task supported by an image forming apparatus, such as whether color printing is possible, whether scanning is possible, or the like), and state information (whether a current job is possible, whether an error occurs, a job progress state, or the like).

If the user touches the document icon 2010 with a hand 10 and then drags and drops the document icon 2010 in "Samsung CLP-415N" positioned in a meeting room on the apparatus list 2020, the image forming apparatus may match with "Samsung CLP-415N" to generate a virtual device. Therefore, the image forming apparatus may resume an execution of a job by requesting "Samsung CLP-415N" to process a task, which is performed in the existing "Samsung CLP-637W".

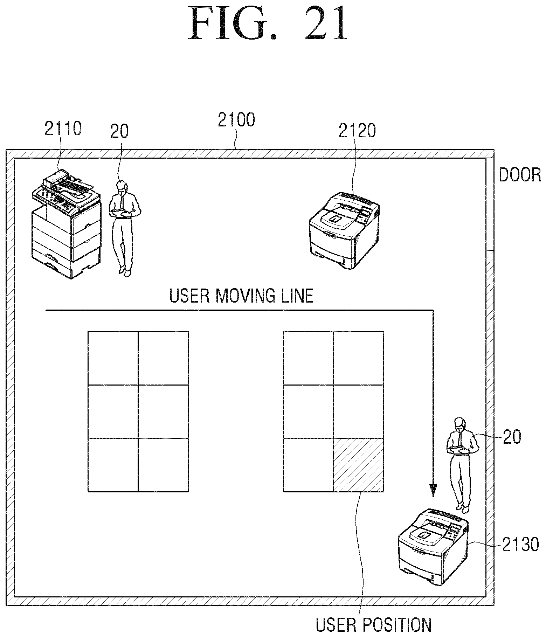

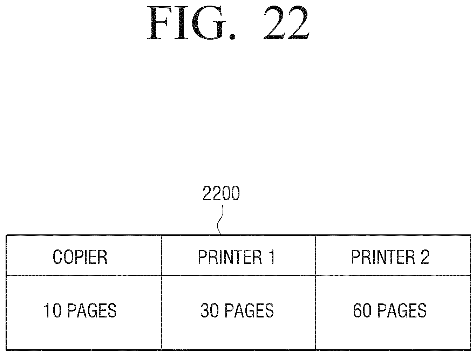

FIGS. 21 and 22 are views illustrating a method of outputting a printed result from a virtual device, according to an exemplary embodiment. In detail, FIGS. 21 and 22 illustrate a method of outputting a printed result in an office environment 2100 including a plurality of image forming apparatuses.

The office environment 2100 includes three image forming apparatuses 2110, 2120, and 2130.

If a user 20 copies a manuscript by using the first image forming apparatus 2110 positioned at a corner opposite to a user position, the first image forming apparatus 2110 may request apparatuses constituting a virtual device with the first image forming apparatus 2110 to distribute a printing task of scan data.

For example, if the first image forming apparatus 2110 constitutes a virtual device with the second image forming apparatus 2120 and the third image forming apparatus 2130, the first image forming apparatus 2110 may executes some printing tasks of the scan data and request the second and third image forming apparatuses 2120 and 2130 to process other printing tasks.

If a printing task is distributed, the first image forming apparatus 2110 may adjust a task size according to a distance between apparatuses constituting a virtual device.

If a copy job execution command is input into the first image forming apparatus 2110, the user 20 may input final destination information (e.g., a user position). Also, position information of the first through third image forming apparatuses 2110, 2120, and 2130 existing in the office environment 2100 may be pre-registered in the first image forming apparatus 2110.

Therefore, if the user 20 inputs the final destination information, the first image forming apparatus 2110 may differently adjust sizes of tasks, which are to be processed by the first through third image forming apparatuses 2110, 2120, and 2130, based on a user moving line, i.e., a distance, from the first image forming apparatus 2110 to the third image forming apparatus 2130 positioned in a final destination.

In detail, when considering a time taken for inputting the copy job execution command into the first image forming apparatus 2110 and returning to a user position where the third image forming apparatus 2130 is positioned, the first image forming apparatus 2110 may process a task having a smallest size. Also, in consideration of a time taken by the user 20 to move from the first image forming apparatus 2110 to the second image forming apparatus 2120, the first image forming apparatus 2110 may request the second image forming apparatus 2120 to process a task having a larger size than the first image forming apparatus 2110.

In consideration of a time taken by the user to move from the first image forming apparatus 2110 to the third image forming apparatus 2130, the first image forming apparatus 2110 may request the third image forming apparatus 2130 to process a task having a largest size. In other words, as apparatuses are positioned at long distances in consideration of distances between the apparatuses according to a moving line of the user 20, the first image forming apparatus 2110 may request a task having a large size.

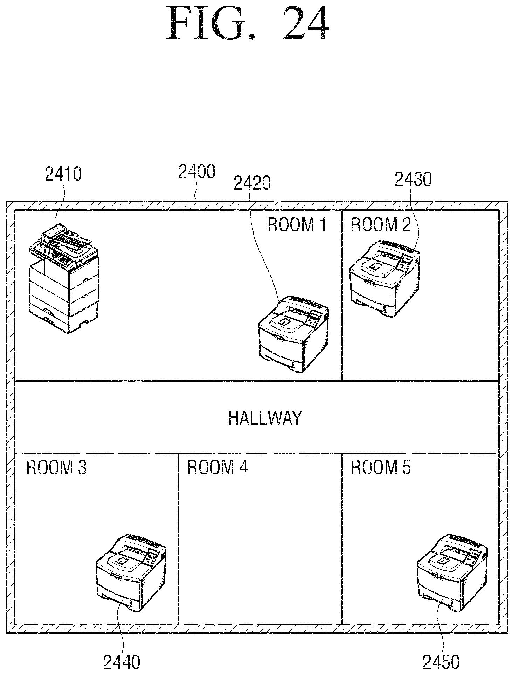

For example, as shown in FIG. 24, if a printing task corresponding to a total of 100 pages is distributed, the first image forming apparatus (copier) 2110 may directly process a printing tasks of 10 pages, request the second image forming apparatus 2120 (printer 1) to process a printing task of 30 pages in consideration of a distance from the first image forming apparatus, and request the third image forming apparatus (printer 2) 2130 to process a printing task of 60 pages.

Therefore, since the user is to wait until a printed result of 10 pages is output from the first image forming apparatus 2110, a waiting time in the first image forming apparatus 2110 is reduced. Also, since the user is to collect a printed result of 30 pages from the second image forming apparatus 2120 and a printed result of 60 pages from the third image forming apparatus 210 with moving a moving line, a whole waiting time taken for outputting the printed results may be reduced.

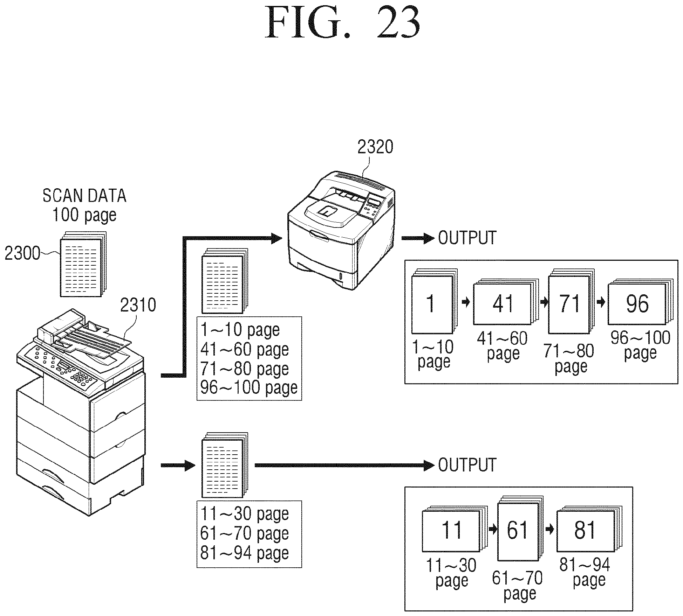

FIG. 23 is a view illustrating a method of outputting a printed result from a virtual device, according to another exemplary embodiment. If a first image forming apparatus 2310 matches with a second image forming apparatus 2320 to constitute a virtual device, the first image forming apparatus 2310 may distribute a printing task of scan data 2300 in the second image forming apparatus 2320.

In FIG. 23, the first image forming apparatus 2310 may be a mono copier, and the second image forming apparatus 2320 may be a color printer.

If a copy job execution command of a manuscript including a mono document and a color document is input, the first image forming apparatus 2310 generates the scan data 2300 by scanning the manuscript and divides the scan data 2300 into mono scan data and color scan data.

In detail, in a process of scanning the manuscript, the first image forming apparatus 2310 may classify pages including color pixel values as scan data and pages including mono pixel values as mono scan data by checking pixel values of each scan image.

As shown in FIG. 23, if pages from 41 to 60, pages from 71 to 80, and pages from 96 to 100 among the scan data 2300 of 100 pages are color scan data, the first image forming apparatus 2310 may request the second image forming apparatus 2320 to process a color printing task of the color scan data.

If pages from 11 to 30, pages from 61 to 70, and pages from 81 to 94 among the scan data 2300 of 100 pages are mono scan data, the first image forming apparatus 2310 directly processes a mono printing task of the mono scan data.

If the first image forming apparatus 2310 outputs all of printed results of the mono scan data in the same direction, the user may directly execute a job of finding pages of discontinuous parts one by one and combining the pages of the discontinuous parts with a color printed result. This lowers user convenience, in particular, as there are many discontinuous parts, and there is the large number of pages of the manuscript, a large amount of time is taken for a job of combining a mono printed result and a color printed result.

Therefore, the first image forming apparatus 2310 and the second image forming apparatus 2320 may change printing output directions of parts where page information is discontinuous, when respectively outputting a mono printed result and a color printed result.

In other words, as shown in FIG. 23, the first image forming apparatus 2310 may output pages from 11 to 30 among the mono printed result in a horizontal direction, output pages from 61 to 70 in a vertical direction, and output pages from 81 to 94 in a horizontal direction.

Also, the second image forming apparatus 2320 may output pages from 1 to 10 among a color printed result in a vertical direction, output pages from 41 to 60 in a horizontal direction, output pages from 71 to 80 in a vertical direction, and output pages from 96 to 100 in a vertical direction.

As described above, the first image forming apparatus 2310 and the second image forming apparatus 2320 may change a printing output direction of a part of a printed result, where page information is discontinuous, differently from a previous output direction, and thus the user may classify the part where the page information is discontinuous. Therefore, the user may easily execute a job of combining a mono printed result and a color printed result.

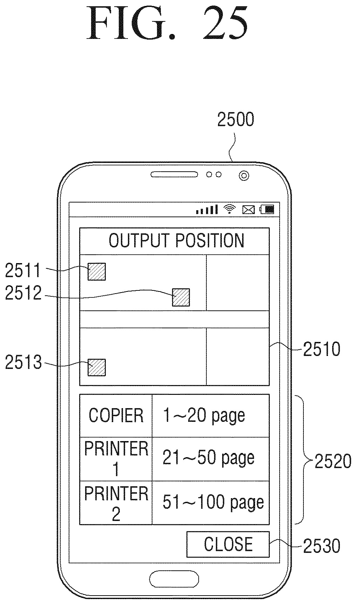

FIGS. 24 and 25 are views illustrating a method of outputting a printed result from a virtual device, according to another exemplary embodiment. FIG. 24 illustrates a method of outputting a printed result in an office environment 2400 including a plurality of image forming apparatuses.

The office environment 2400 includes 5 rooms. Two image forming apparatuses 2410 and 2420 exist in room 1, image forming apparatuses 2430, 2440, and 2450 respectively exist in rooms 2, 3, and 5, and there is no image forming apparatus in room 4.

If a user copies a manuscript by using the first image forming apparatus 2410, the first image forming apparatus 2410 may request apparatuses constituting a virtual device along with the first image forming apparatus 2410 to distribute a printing task of scan data.

For example, if the first image forming apparatus 2410 constitutes a virtual device along with the second image forming apparatus 2420 and a fourth image forming apparatus 2440, the first image forming apparatus 2410 may execute some printing tasks of the scan data and request the second and fourth image forming apparatuses 2420 and 2440 to process other printing tasks.

Therefore, printing tasks of the scan data may be distributed by the first image forming apparatus 2410, the second image forming apparatus 2420, and the fourth image forming apparatus 2440.

If the printing tasks distributed to the first image forming apparatus 2410, the second image forming apparatus 2420, and the fourth image forming apparatus 2440 are all processed, the first image forming apparatus 2410 may transmit position images and job execution information of apparatuses executing the printing tasks to a preset user contact number.

In this case, the user contact number may be set when inputting a copy job execution command into the first image forming apparatus 2410 or may be automatically set by tagging an NFC module included in an employee card or an identification card onto the first image forming apparatus 2410.

The position images may be reduced images corresponding to the office environment 2400 and may include position identifiers corresponding to the first through fifth image forming apparatuses 2410, 2420, 2430, 2440, and 2450 existing in the office environment 2400.

However, the position images transmitted to the user contact number may be states where merely position identifiers of the first image forming apparatus 2410, the second image forming apparatus 2420, and the fourth image forming apparatus 2440 used for a copy job execution are displayed. This will be described with reference to FIG. 25.

Referring to FIG. 25, a user terminal apparatus 2500 displays a position image 2510 and copy job execution information 2520 indicating a position of an apparatus outputting a result.

Since the position image 2510 includes position identifiers 2511, 2512, and 2513 of the first image forming apparatus 2410, the second image forming apparatus 2420, and the fourth image forming apparatus 2440 used for a copy job execution, the user may recognize a position of a result through the position identifiers 2511, 2512, and 2513.

Also, the copy job execution information 2520 includes page numbers of printed results that are respectively output from the first image forming apparatus 2401, the second image forming apparatus 2420, and the fourth image forming apparatus 2440.

Therefore, through the copy job execution information 2520, the user may recognize that pages from 1 to 20 are output from the first image forming apparatus 2410 corresponding to a copier, pages from 21 to 50 are output from the second image forming apparatus 2420 corresponding to printer 1, and pages from 50 to 100 are output from the fourth image forming apparatus 2440 corresponding to printer 3.

As described above, as the copy job execution information 2520 is displayed on the user terminal apparatus 2500, the user may check whether all results are found, by comparing a page of a result found by the user with each page information included in the job execution information 2520.

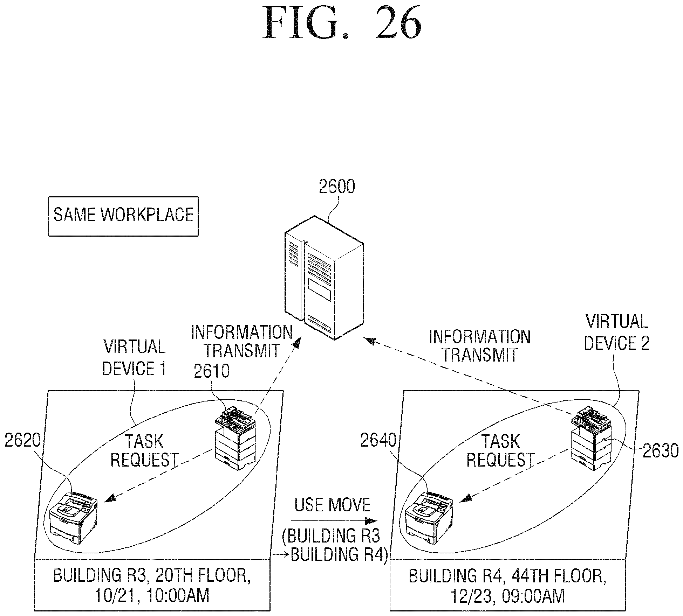

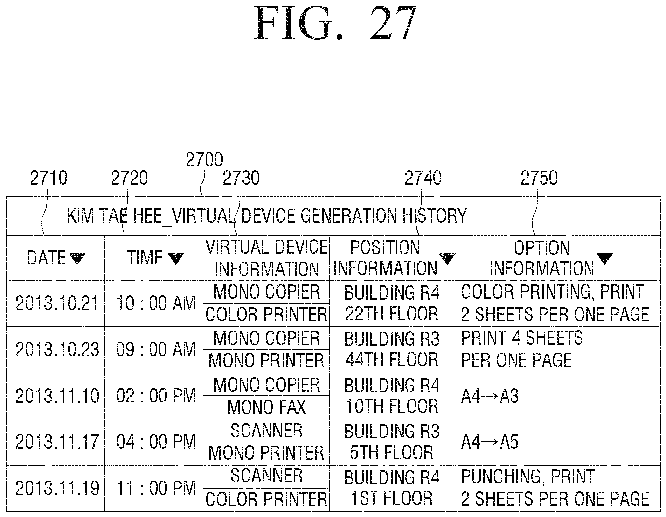

FIGS. 26 and 27 are views illustrating a method of restoring a virtual device using a server apparatus.

Referring to FIG. 26, a server apparatus 2600 stores information about a virtual device generation history of a first image forming apparatus 2610.

In detail, if a user generates a virtual device 1 by using the first image forming apparatus 2610 and a second image forming apparatus 2620 at 10 AM, on October 21, on 20th floor of building R2, the first image forming apparatus 2610 may request the second image forming apparatus 2620 to process a preset task. As described above, as the virtual device 1 is generated, the first image forming apparatus 2610 transmits user identification information, virtual device information, time information, position information, and option information to the server apparatus 2600.

The server apparatus 2600 accumulatively registers a history of a corresponding user who generates a virtual device, based on user identification information. Therefore, the server apparatus 2600 may generate a virtual device generation history 2700 as shown in FIG. 27 and manage the virtual device generation history according to each user.

The virtual device generation history 2700 is about user "Kim Tae-hee" and includes date information 2710, time information 2720, virtual device information 2730, position information 2740, and option information 2750 where "Kim Tae-hee" generates a virtual device.

Here, the virtual device information 2730 may be apparatus information constituting a virtual device when the user generates the virtual device by using preset image forming apparatuses.

For example, if a virtual device of a color copier is generated by using a mono copier and a color printer, product names, such as the mono copier, the color printer, and the like, may be the virtual device information 2730. However, the virtual device information 2730 is not limited thereto and may be model names of apparatuses constituting a virtual device.

If a virtual device is to be generated to execute a job when the user moves from 20th floor of building R3 onto 44th floor of building R4, the user may access the server apparatus 2600 through the third image forming apparatus 2630.

If the virtual device generation history 2700 is displayed through the third image forming apparatus 2630, the user may select virtual device information, which is to be restored, from the virtual device generation history 2700.

The user may select virtual device information that the user wants, by checking the date information 2710, the time information 2720, the virtual device information 2730, the position information 2740, and the option information 2750 included in the virtual device generation history 2700.

In general, the date information 2710 or the time information 2720 is information that is difficult for the user to remember, but the position information 2740 or the option information 2750 is information that is easy for the user to remember. Therefore, since the server apparatus 2600 manages them together, the user may quickly and simply find virtual device information wanted by the user among a plurality of pieces of virtual device information that are previously used by the user.

If virtual device information that is to be restored is selected from the virtual device generation history 2700, the third image forming apparatus 2630 may restore virtual device 2 corresponding to virtual device 1 based on apparatuses equal or similar to apparatuses included in the virtual device information.

In other words, the third image forming apparatus 2630 may automatically match with the fourth image forming apparatus 2640 to generate the virtual device 2. Here, as the virtual device 2 is generated, the third image forming apparatus 2630 may transmit user identification information and information, which indicates that the virtual device 2 is generated at 9 AM, on December 23, on 44th floor of building R4, to the server apparatus 2600.

Therefore, the server apparatus 2600 may update the virtual device generation history 2700 of the user "Kim Tae-hee". The server apparatus 2600 may generate the virtual device generation history and manage the virtual device generation history according to each user.

As described above, although the user moves to a new place to perform outputting of a document, an existing virtual device that is used by the user may be restored by using the virtual device generation history 2700 managed in the server apparatus 2600, in particular, option information that is applied to a virtual device may also be restored. The user may easily execute a job by restoring a wanted virtual device through merely the virtual device generation history 2700 without directly generating a virtual device.

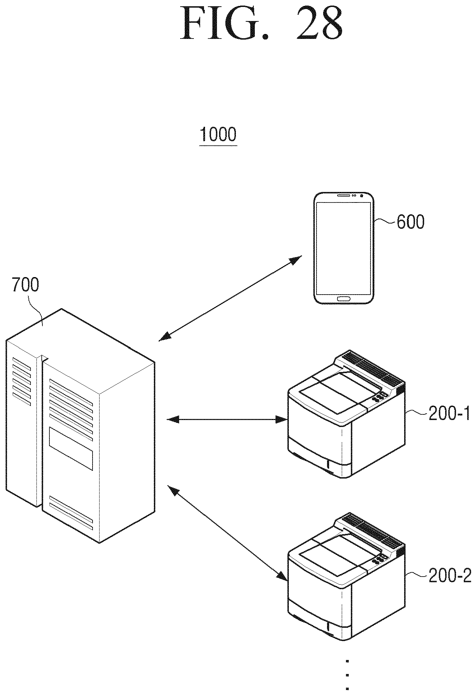

FIG. 28 is a block diagram illustrating a printing system according to an exemplary embodiment of the present invention.

Referring to FIG. 28, a printing system 1000 includes a mobile device 600, a plurality of image forming apparatuses 200-1 and 200-2, and a cloud server 700.

The mobile device 600 generates position information and transmits the generated position information and a job execution request to the cloud server 700. Also, the mobile device 600 receives information about an image forming apparatus adjacent to the mobile device 600 from the cloud server 700.

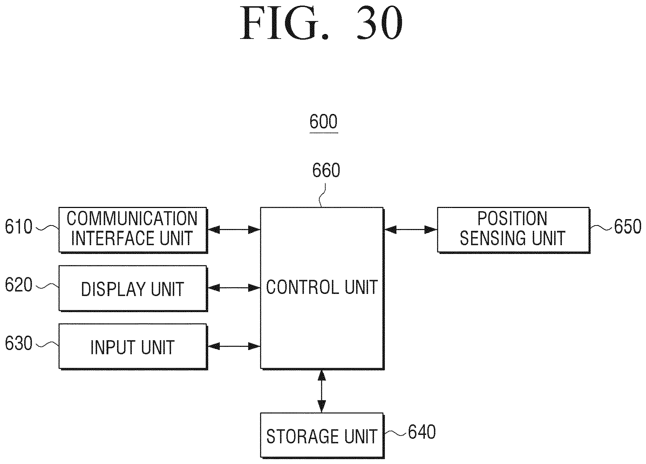

In addition, the mobile device 600 may transmit information about an image forming apparatus, which is to execute a job, to the cloud server 700. Here, if a job that a user of the mobile device 600 is to perform is a printing job, the mobile device 600 may transmit a pre-stored printing file to the cloud server 700. Here, the mobile device 600 may be a notebook computer, a portable phone, a smartphone, a PMP, an MP3 player, or the like. Detailed configuration and operation of the mobile device 600 will be described later with reference to FIG. 30.

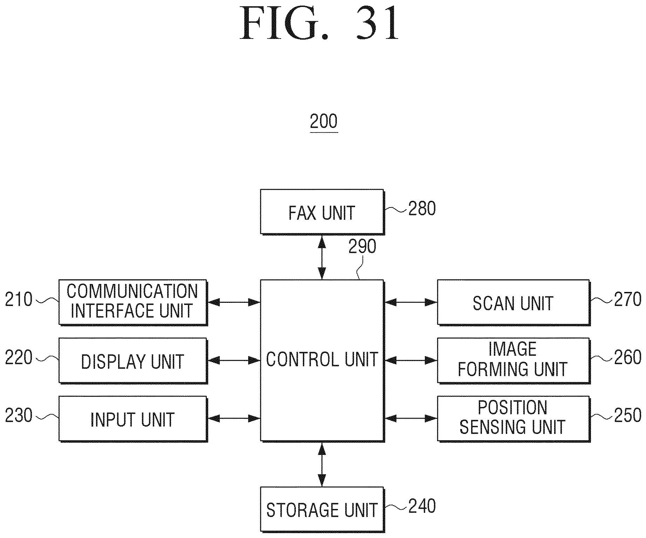

The plurality of image forming apparatuses 200-1 and 200-2 respectively receive job execution command information for identifying a user from the cloud server 700. Also, if the plurality of image forming apparatuses 200-1 and 200-2 receive user identification information from a user corresponding to the mobile device 600, the plurality of image forming apparatuses 200-1 and 200-2 may respectively execute a job corresponding to the job execution command received from the cloud server 700. Here, each of the plurality of image forming apparatuses 200-1 and 200-2 may be a printer, a scanner, a copier, and a fax machine capable of performing at least one function selected from a scanning function, a printing function, a faxing function, and copying function, and an MFP where their functions are combined. Detailed configuration and operation of an image forming apparatus 200 will be described later with reference to FIG. 31. The image forming apparatus according to the present exemplary embodiment may perform the function of FIG. 2.

The cloud server 700 may store position information of the plurality of image forming apparatuses 200-1 and 200-2, if a job execution request and position information of the mobile device are received from the mobile device 600, search for at least one image forming apparatus adjacent to the mobile device 600 among the plurality of image forming apparatuses 200-1 and 200-2 by using pre-stored position information of the plurality of image forming apparatuses 200-1 and 200-2 and the received position information of the mobile device 600, and notify the search result to the mobile device 600.

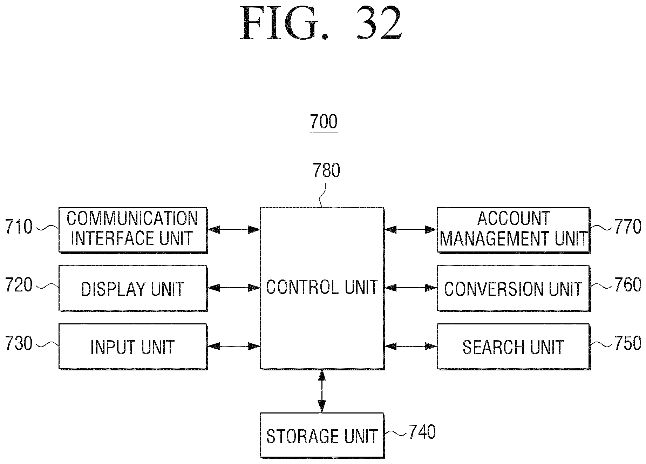

If a job execution command of the particular image forming apparatus 200 is received from the mobile device 600, the cloud server 700 may transmit information for identifying the user of the mobile device 600 to the particular image forming apparatus 200. If a job execution command of the user is a printing command, the cloud server 700 may receive a printing file from the mobile device 600 and transmit the received printing file to the image forming apparatus 200 selected by the user. Here, the cloud server 700 may convert the received printing file into a file recognizable by the selected image forming apparatus 200 and transmit the converted file. Detailed configuration and operation of the cloud server 700 will be described later with reference to FIG. 32.

As described above, the printing system 1000 according to the present exemplary embodiment may search for the image forming apparatus 200 adjacent to the mobile device 600, provide the mobile device 600 with the searched image forming apparatus 200, and enables the searched image forming apparatus 200 to easily execute a job. Therefore, the user may easily execute a printing job in any place. Also, the image forming apparatus 200 may execute jobs of a pre-registered user and an unspecific user, and thus a use frequency thereof may be improved. In addition, the cloud server 700 may relay and process charges issued in this process, and thus user convenience may be improved.

In the description of FIG. 28, one mobile device 600 and two image forming apparatuses 200-1 and 200-2 are connected to the cloud server 700. However, two or more mobile devices 600 may be realized to be connected and to be connected to three or more image forming apparatuses.

Also, apparatuses may be realized to be respectively directly connected or to be indirectly connected through a router, another apparatus (e.g., a server), or the like. In addition, apparatuses have been described to be connected by wire in the illustrated example but may be realized to be wirelessly connected.

A printing file is transmitted to the image forming apparatus 200 through the cloud server 700 in the description of FIG. 28 but may be realized to be immediately transmitted from the mobile device 600 to the cloud server 700.

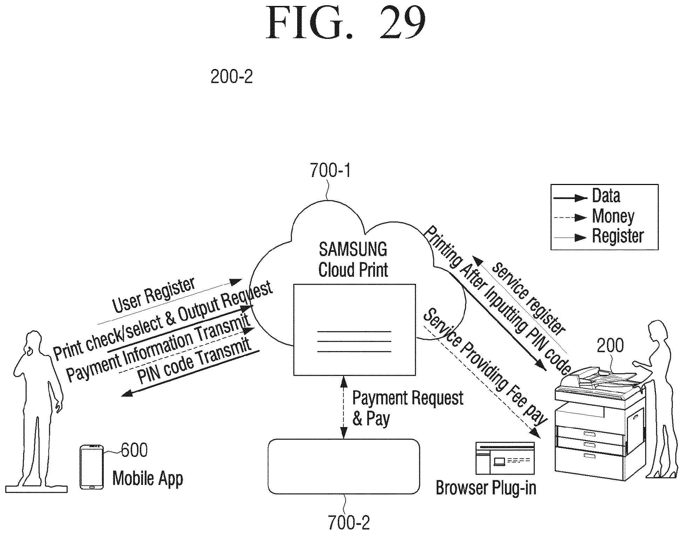

FIG. 29 is a view illustrating an operation of a printing system according to an exemplary embodiment of the present invention.

Referring to FIG. 29, a manager of the image forming apparatus 200 may register a participation in a service according to the present exemplary embodiment in the cloud server 700. In detail, the image forming apparatus 200 may transmit position information, operation time information, information about charge cost, account information, and the like to the cloud server 700. Here, the cloud server 700 may store transmitted information and allocate identification information (e.g., a phone number) about the corresponding image forming apparatus 200.

Also, the mobile device 600 may register that the mobile device 600 is provided with the service according to the present exemplary embodiment, in the cloud server 700. In detail, the mobile device 600 may transmit information (e.g., a phone number of a mobile device, user login information (an ID and passwords), and the like) for identifying the mobile device 600, payment account information, and the like to the cloud server 700. Here, the cloud server 700 may store information transmitted from the mobile device 600. The payment account information may be transmitted later when payment is needed.

Also, the mobile device 600 may transmit a job execution request and position information thereof to the cloud server 700. In response to this, the cloud server 700 may search for an image forming apparatus adjacent to the mobile device 600 and transmit information about the searched image forming apparatus to the mobile device 600. The job execution request and the position information have been described above as being separately transmitted. However, the position information may be included in the job execution request, and then merely the job execution request may be transmitted or the position information may be transmitted as the job execution request. In addition, the job execution request may be a request for a need for using an image forming apparatus or may be a job request associated with a particular function such as a printing execution request, a scan execution request, or the like.

The mobile device 600 may select an image forming apparatus that is to execute a job based on information about the image forming apparatus transmitted from the cloud server 700 and transmit a job execution command of the selected image forming apparatus to the cloud server 700. Here, the transmitted information about the image forming apparatus may include position information, charge cost information, performable function information, and the like. Here, charge information associated with a job execution may be transmitted to the cloud server.

The cloud server 700 that receives the charge information and the job execution command may transmit the job execution command and information for identifying the mobile device 600 to the image forming apparatus corresponding to the job execution command. Here, the information for identifying the mobile device 600 may be at least one selected from a pin code transmitted to the mobile device 600 in response to the use request, a phone number of the mobile device, and login information of the user.

If the image forming apparatus 200 selected by a user corresponding to the mobile device 600 inputs identification information, the image forming apparatus 200 may execute a job corresponding to the job execution command. Also, the image forming apparatus 200 transmits a completion of the job execution to the cloud server 700. Therefore, the cloud server 700 may pay cost corresponding to the job execution to an account corresponding to the image forming apparatus 200 that executes the job. The cost payment may occur in real time and periodically.

The cloud server 700 has been described as including two servers (in detail, a server 300-1 relaying a job execution and a server 300-2 authenticating payment) in FIG. 29. However, the cloud server 700 may be realized as one server or three or more servers (e.g., a cloud server relaying data, an authentication server performing an apparatus authentication, and a payment server performing a payment authentication).

FIG. 30 is block diagram illustrating a detailed configuration of the mobile device of FIG. 28.

Referring to FIG. 30, the mobile device 600 according to an exemplary embodiment of the present invention may include a communication interface unit 610, a display unit 620, an input unit 630, a storage unit 640, a position sensing unit 650, and a control unit 660.

The communication interface 610 may be formed to connect the mobile device 600 to an external device and may be realized as a type connected through a Local Area Network (LAN) and an internet network or through a Universal Serial Bus (USB) port and a wireless module. Here, the wireless module may be WiFi, WiFi Direct, NFC, Bluetooth, IR, or the like.

The communication interface unit 610 may request the cloud server 700 to register that a service according to the present exemplary embodiment is provided. In detail, the communication interface unit 610 may transmit information (e.g., a phone number of the mobile device, user login information (an ID and passwords), and the like) for identifying the mobile device 600, payment account information, and the like to the cloud server 700. The payment account information may be transmitted later when payment is needed.

Also, the communication interface unit 610 transmits a job execution request and position information to the cloud server 700. Here, the job execution request may be a request for a need for using of an image forming apparatus or a request for a particular function such as a printing execution request, scan execution request, a copy execution request, a fax execution request, or the like. Also, option information and the like may be requested along with the particular function.

In addition, the communication interface unit 610 may receive information about an adjacent image forming apparatus from the cloud server 700. In detail, the communication interface unit 610 may receive information about a searched image forming apparatus from the cloud server 700. Here, the information about the image forming apparatus may include address information of the image forming apparatus, map information, supportable function information, usable time information, charge cost information, and the like.

Also, the communication interface unit 610 transmit information about an image forming apparatus, which is to execute a job, to the cloud server 700. Here, the communication interface unit 610 may transmit detailed job information, which is to be executed in the corresponding image forming apparatus, together. Here, the job information may include a function that is to be performed in the corresponding image forming apparatus and an option of the corresponding function.

Also, the communication interface unit 610 may receive information about charges from the cloud server 700. In addition, the communication interface unit 610 may transmit payment information about the received charges to the cloud server 700.

Also, the communication interface unit 610 may receive authentication information, which enables a job to be executed in the corresponding image forming apparatus, from the cloud server 700. Here, the authentication information may be an ID and passwords or may be a pin code into which particular numbers or characters are combined, or the like.

The communication interface unit 610 may transmit a printing file to the cloud server 700. Here, the printing file may be data of a printer language such as Postscript (PS), Printer Control Language (PCL), or the like or may be a file such as PDF, XPS, BMP, JPG, or the like.

Also, the communication interface unit 610 may transmit the received authentication information to the image forming apparatus 200. In detail, if the communication interface unit 610 supports NFC, the communication interface unit 610 may transmit the received authentication information to the image forming apparatus 200.

The display unit 620 may display various types of information supported in the mobile device 600. The display unit 620 may be a monitor such an LCD, a CRT, or the like and may be realized as a touch screen capable of simultaneously performing functions of the input unit 630 that will be described later.

The display unit 620 may display a screen for registering that the service according to the present exemplary embodiment is provided. In detail, the display unit 620 may display a screen for receiving information for identifying the mobile device 600 for a service subscription, payment account information, and the like.

Also, the display unit 620 may display a list of applications installed in the mobile device 600. The display unit 620 may also display an execution screen according to driving of an application.

In addition, the display unit 620 may display a screen for selecting an image forming apparatus that is to perform a job. In detail, the display unit 620 may display information of an adjacent image forming apparatus received from the cloud server 700. Here, the display unit 620 may display a position of the adjacent image forming apparatus in a map shape. Also, the display unit 620 may display the position along with charge cost, supportable function information, usable time information, and the like of the corresponding image forming apparatus.

In addition, the display unit 620 may display a screen for selecting a job that is to be executed in a previous selected image forming apparatus. In detail, the display unit 620 may display a screen for receiving a function that is to be performed in the selected image forming apparatus and an option of the function (e.g., whether color printing is possible, the number of times printing being performed, or the like). A job has been described above as being selected after an image forming apparatus is selected, but the image forming apparatus may be selected after the job is selected.

Also, the display unit 620 may display a screen for charge payment for the selected job. In addition, the display unit 620 may display authentication information received from the cloud server 700.

The display unit 620 may also select an image forming apparatus, which is to belong to a job group, among image forming apparatuses that will be registered in a user account.

The input unit 630 includes a plurality of function keys through which the user may set or select various types of functions supported in the mobile device 600. The input unit 630 may be realized as a unit such as a mouse, a keyboard, or the like or may be realized as a touch screen capable of simultaneously performing functions of the display unit 620 that are described above.

Also, the input unit 630 may receive an application driving command. In detail, if the user wants to execute a job by using an image forming apparatus, the user may drive an application installed in the mobile device 600 or may input a driving command of a web browser application accessing a particular web page.

Also, the input unit 630 may receive information for registering that the service according to the present exemplary embodiment is provided. In detail, the input unit 630 may receive information for identifying the mobile device 600 for a service subscription, payment account information, and the like.

In addition, the input unit 630 may select a particular application from an application list installed in the mobile device 600 displayed on the display unit 620.

The input unit 630 may also receive a selection of an image forming apparatus that is to execute a job. In detail, the input unit 630 may receive a selection of an image forming apparatus, which is to execute a job, among adjacent image forming apparatuses displayed on the display unit 620.

Also, the input unit 630 may receive a job that is to be executed in a previously selected image forming apparatus. In detail, the input unit 630 may receive a function that is to be performed in the selected image forming apparatus and an option of the function (e.g., whether color printing is possible, a print run, or the like).

Also, the input unit 630 may receive payment information for paying charges for the selected job.

The storage unit 640 stores a printing file. The storage unit 640 may also store information (e.g., phone number information) of the mobile device and position information sensed by the position sensing unit 650 that will be described later.

In addition, the storage unit 640 may store various types of information received through the communication interface unit 610. The storage unit 640 may be realized as a storage medium of the mobile device 600 or an external storage medium, e.g., as a removable disk including a USB memory, a Web server through a network, or the like.

The position sensing unit 650 generates position information of the mobile device 600. In detail, if the mobile device 600 includes a GPS module capable of receiving a GPS signal, the position sensing unit 650 may generate position information by using the GPS signal received through the GPS module. Alternatively, the position sensing unit 650 may generate the position information by using a position sensing service provided from 3G or WIFI. Alternatively, the position sensing unit 650 may generate the position information by receiving position information from the user.

The control unit 660 controls elements of the mobile device 600. In detail, if the control unit 660 receives a driving command of an application for using an image forming apparatus from the user, the control unit 660 may control the position sensing unit 650 to generate the position information of the mobile device 600.

Also, the control unit 660 may control the communication interface unit 610 to transmit the generated position information to the cloud server 700 and, if information of an adjacent image forming apparatus is received in response to this, control the display unit 620 to display the received information.

Also, if an image forming apparatus and a job are selected by the user, the control unit 660 may transmit a job execution command to the cloud server 700 so as to execute a job in the selected image forming apparatus. Also, the control unit 660 may control the display unit 620, the input unit 630, and the communication interface unit 610 to execute a charging job corresponding to the job execution command. In addition, if the job execution command is a printing command, the control unit 660 may control the communication interface unit 610 to transmit a pre-stored printing file to the cloud sever 700.

Also, if the control unit 660 is NFC-tagged onto the selected image forming apparatus 200, the control unit 660 may transmit pin information received according to charge payment to the image forming apparatus 200.

As described above, the mobile device 600 according to the present exemplary embodiment may search for the image forming apparatus 200 adjacent to the mobile device and enable the searched image forming apparatus 200 to execute a job. Therefore, the user may easily execute a printing job in any place.

FIG. 31 is a block diagram illustrating a detailed configuration of the image forming apparatus of FIG. 28.

Referring to FIG. 31, the image forming apparatus 200 may include a communication interface unit 210, a display unit 220, an input unit 230, a storage unit 240, a position sensing unit 250, an image forming unit 260, a scanning unit 270, a faxing unit 280, and a control unit 290. The image forming apparatus 200 may be one of the image forming apparatuses 200-1 and 200-2 of FIG. 28.

The communication interface unit 210 is formed to connect the image forming apparatus 200 to an external device and may be realized as a type connected through a Local Area Network (LAN) and an internet network and through a Universal Serial Bus (USB) port and a wireless module. Here, the wireless module may be WiFi, WiFi Direct, Near Field Communication (NFC), Bluetooth, or the like.

Also, the communication interface unit 210 may request the cloud server 700 to register that a service according to the present exemplary embodiment is provided. In detail, the communication interface unit 210 may transmit position information, operation time information, information about charge cost, account information, and the like of the image forming apparatus 200 to the cloud server 700. Through this operation, the communication interface unit 210 may be notified of identification information (e.g., a phone number) about the corresponding image forming apparatus 200. Here, the operation time information is time for providing a particular user with the above-described service. For example, if the above-described service is to be provided for a particular user from 2 PM to 5 PM, a manager may set an operation time from 2 PM to 5 PM. Here, the operation time information may include information about an operation day or an operation date.

Also, the communication interface unit 210 transmits state information to the cloud server 700. In detail, the communication interface unit 210 may transmit, whether an error occurs and whether a job is currently performed, to the cloud server 700.

In addition, the communication interface unit 210 may receive a job execution command and first user identification information corresponding to the job execution command from the cloud server 700. Here, the first user identification information may be an ID and passwords or may be a pin code into which particular numbers or characters are combined, or the like.

The communication interface unit 210 may also receive second user identification information from a mobile device. In detail, if the communication interface unit 210 supports NFC, the communication interface unit 210 may receive the second user identification information from the mobile device 600 according to an NFC tag method.

Also, the communication interface unit 210 may receive a printing file. In detail, the communication interface unit 210 may receive the printing file from the cloud server 700. Here, the printing file may be data of a printer language such as Postscript (PS), Printer Control Language (PCL), or the like or may be a file such as PDF, XPS, BMP, JPG, or the like.

Also, the communication interface unit 210 may transmit a scan file. In detail, the communication interface unit 210 may transmit an image file, which is generated according to a result of performing a function of the scanning unit 270 that will be described, to a device that is set by a user.

In addition, the communication interface unit 210 may notify the cloud server 700 of a completion of a printing job.

The display unit 220 may display various types of information supported in the image forming apparatus 200. The display unit 220 may be a monitor such as an LCD, a CRT, or the like or may be realized as a touch screen capable of simultaneously performing functions of the input unit 230 that will be described later.

Also, the display unit 220 may display a screen for registering that the service according to the present exemplary embodiment is provided. In detail, the display unit 220 may display a screen for receiving position information, operation time information, information about charge cost, account information, and the like of the image forming apparatus 200 for a service subscription.

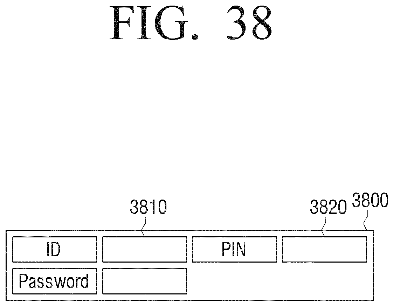

In addition, the display unit 220 may display a screen for a user authentication. In detail, the display unit 220 may display a user interface window as shown in FIG. 38.

Also, the display unit 220 may display a screen for controlling a function of the image forming apparatus.

The input unit 230 includes a plurality of function keys through which the user may set or select various types of functions supported in the image forming apparatus. The input unit 230 may be realized as a unit such as a mouse, a keyboard, or the like or may be realized as a touch screen capable of simultaneously performing functions of the display unit 220 that is described above.

Also, the input unit 230 may receive information for registering that the service according to the present exemplary embodiment is provided. In detail, the input unit 230 may receive position information of the image forming apparatus 200 for a service subscription, operation time information, information about charge cost, account information, and the like through a screen displayed on the display unit 220.

Also, the input unit 230 may receive information for a user authentication. In addition, the input unit 230 may receive a function (i.e., a job execution command) that will be performed in the image forming apparatus.

The storage unit 240 stores a printing file. In detail, the storage unit 240 may store a printing file received through the communication interface unit 210.

The storage unit 240 may also store information of the image forming apparatus 200 such as individual identification information (e.g., a phone number) allocated to the cloud server, position information, or the like.

The storage unit 240 may be a storage medium of the image forming apparatus 200 or an external storage medium, e.g., may be realized as a removable disk including a USB memory, a Web server through a network, or the like.

The position sensing unit 250 generates position information of the image forming apparatus 200. In detail, if the image forming apparatus 200 includes a GPS module capable of receiving a GPS signal, the position sensing unit 250 may generate position information by using the GPS signal received through the GPS module. Alternatively, the position sensing unit 250 may generate position information by using a position sensing service provided from 3G or WIFI. Alternatively, the position sensing unit 250 may generate the position information by receiving position information from the user.

The image forming unit 260 performs an image forming function. In detail, the image forming unit 260 may print a printing file received through the communication interface unit 210 or may print a scan image generated by the scanning unit 270.

. The scanning unit 270 generates the scan image by scanning a manuscript. In detail, if a job execution command of the user is a copy command, a scan command, or a fax transmission command, the scanning unit 270 may generate the scan image by scanning the manuscript. Also, if the job execution command of the user is the scan command, the scanning unit 270 may transmit the scan image to the communication interface unit 210 so as to store the generated scan image in a preset storage place. Also, if the job execution command of the user is the copy command, the scanning unit 270 may transmit the generated scan image to the image forming unit 260 so as to print the generated scan image. In addition, if the job execution command of the user is the fax transmission command, the scanning unit 270 may transmit the generated scan image to the faxing unit 280 so as to transmit the generated scan image by fax.

The faxing unit 280 transmits the scan image by fax. In detail, if the job execution command of the user is the fax transmission command, the faxing unit 280 may transmit the scan image generated by the scanning unit 270 to a pre-input fax address by fax.

The control unit 290 controls elements of the image forming apparatus 200. In detail, the control unit 290 may control the communication interface unit 210 to transmit operation time information about an unspecific user to the cloud server 700. Also, if a job execution command and first user identification information are received through the communication interface unit 210, and second user identification information is received through the input unit 230, the control unit 290 determines whether the first identification information corresponds to the second user identification information.

If the first user identification information corresponds to the second user identification information, the control unit 290 may control at least one element selected from the image forming unit 260, the scanning unit 270, and the faxing unit 280 so as to perform a function corresponding to the received job execution command. In detail, if a requested job execution command is a printing command, the control unit 290 may control the image forming unit 260 to print printing data received from the cloud server 700. If the requested job execution command is a copy command, the control unit 290 may control the scanning unit 270 and the image forming unit 260 to scan the manuscript and perform printing of the manuscript. Also, if the requested job execution command is a scan job, the control unit 290 may control the scanning unit 270 and the communication interface unit 210 to scan the manuscript and transmit an image of the scanned manuscript to a preset storage place. Also, if the requested job execution command is a fax job, the control unit 190 (or 290?) may control the scanning unit 270 and the faxing unit 280 to scan the manuscript and transmit an image of the scanned manuscript by fax.

As described above, the image forming apparatus 200 according to the present exemplary embodiment may execute jobs for a pre-registered user and an unspecific user and thus may improve a use frequency thereof.

The image forming apparatus 200 has been described above as including all of the image forming unit 260, the scanning unit 270, and the faxing unit 280 but may be realized to include merely the image forming unit 260, include merely the scanning unit 270, or include merely the image forming unit 260 and the scanning unit 270.

FIG. 32 is a block diagram illustrating a detailed configuration of the cloud server of FIG. 28.

Referring to FIG. 32, the cloud server 700 according to the present exemplary embodiment may include a communication interface unit 710, a display unit 720, an input unit 730, a storage unit 740, a search unit 750, a conversion unit 760, an account management unit 770, and a control unit 780.

The communication interface unit 710 is formed to connect the cloud server 700 to an external device and may be realized as type connected through a Local Area Network (LAN) and an internet network and through a Universal Serial Bus (USB) port and a wireless module. Here, the wireless module may be WiFi, WiFi Direct, NFC, Bluetooth, IR, or the like.

The communication interface unit 710 may receive a request for registering that a service according to the present exemplary embodiment is provided, from the mobile device 600. In detail, the communication interface unit 710 may receive information (e.g., a phone number of a mobile device, user login information (an ID and passwords), or the like) for identifying the mobile device 600, payment account information, and the like from the mobile device 600. The payment account information may be received later when payment is needed.

Also, the communication interface unit 710 may receive a request for registering that the service according to the present exemplary embodiment is provided, from the image forming apparatus 200. In detail, the communication interface unit 710 may receive position information, operation time information, information about charge cost, account information, and the like of the image forming apparatus 200 from the image forming apparatus 200. Through this operation, the communication interface unit 710 may notify the corresponding image forming apparatus 200 of identification information (e.g., a phone number) about the image forming apparatus 200. Here, the operation time information is a time for providing a particular user with the above-described service. For example, if the manager is to provide the particular user with the above-described service from 2 PM to 5 PM, the manager may set the time from 2 PM to 5 PM to an operation time. Here, the operation time information may also include information about an operation day or an operation date.

Also, the communication interface unit 710 may receive state information of the image forming apparatus 200. In detail, the communication interface unit 710 may respectively receive, whether an error occurs in an image forming apparatus, whether a job is currently performed, from a plurality of image forming apparatuses 200-1 and 200-2 that are connected.

In addition, the communication interface unit 710 receives a job execution request and position information from the mobile device 600. Here, the job execution request may be a request for a need for using an image forming apparatus or may be a request for a particular function such as a printing execution request, a scan execution request, a copy execution request, a fax execution request, or the like. Also, option information and the like may be requested together with the particular function.

Also, the communication interface unit 710 may transmit information about an adjacent image forming apparatus to the mobile device 600. In detail, the communication interface unit 710 may transmit information about an image forming apparatus searched by the search unit 750, which will be described later, to the mobile device 600. Here, the information about the image forming apparatus may include address information of the image forming apparatus, map information, supportable function information, usable time information, charge cost information, and the like.

In addition, the communication interface unit 710 may receive information about an image forming apparatus, which is to execute a job, from the mobile device 600. Here, detailed job information about the corresponding image forming apparatus may be received together. Here, the job information may include a function that is to be performed in the corresponding image forming apparatus and an option of the corresponding function.

Also, the communication interface unit 710 may transmit information about charges calculated by the control unit 780, which will be described later, to the mobile device 600. In addition, the communication interface unit 710 may receive payment information corresponding to the transmitted charges, from the mobile device 600.

Also, the communication interface unit 710 may transmit authentication information, which enables a job to be executed in an image forming apparatus, to the mobile device 600. Here, the authentication information may be an ID and passwords or may be a pin code into which particular numbers or characters are combined, or the like.

Also, the communication interface unit 710 may transmit a job execution command and first user identification information corresponding to the job execution command to the image forming apparatus 200.

In addition, the communication interface unit 710 may receive a printing file from the mobile device 600. Here, the printing file may be data of a printer language such as Postscript (PS), a Printer Control Language (PCL), or the like or may be a file such as PDF, XPS, BMP, JPG, or the like.

Also, the communication interface unit 710 may transmit the received printing file to the selected image forming apparatus 200. In detail, the communication interface unit 710 may transmit the received printing file to the selected image forming apparatus 200 or may transmit a printing file converted by the conversion unit 760, which will be described later, to the selected image forming apparatus 200.

In addition, the communication interface unit 710 may receive a scan file. In detail, the communication interface unit 710 may receive a scan image file from the image forming apparatus 200.

Also, the communication interface unit 710 may receive a printing job completion from the selected image forming apparatus 200.

The display unit 720 may display various types of information supported in the cloud server 700. The display unit 710 may be a monitor such as an LCD, a CRT, or the like or may be realized as a touch screen capable of simultaneously performing functions of the input unit 730 that will be described later.

The input unit 730 includes a plurality of function keys through which the user may set or select various types of functions supported in the cloud server 700. The input unit 730 may be realized as a unit such as a mouse, a keyboard, or the like or may be realized as a touch screen capable of simultaneously performing functions of the display unit 720 that is described above.

The storage unit 740 stores information about a user account. Here, the information about the user account is information including a phone number corresponding to the user account, information (e.g., an ID and passwords) for a user authentication, information of an image forming apparatus corresponding to the user account, and the like.

The storage unit 740 also stores information about an image forming apparatus account. Here, the information about the image forming apparatus account is information including a phone number, a physical address, and an account address of the image forming apparatus 200, and a user account for using the corresponding image forming apparatus.

Also, if the storage unit 740 is capable of storing a printing file, the storage unit 740 may store data converted by the conversion unit 760 that will be described later.

The storage unit 740 may be a storage medium of the cloud server 700 or an external storage medium, e.g., may be realized as a removable disk including a USB memory, a file server through a network, or the like.

The search unit 750 searches for at least one image forming apparatus adjacent to the mobile device among a plurality of image forming apparatuses based on position information of a plurality of image forming apparatuses where received position information of the mobile device is pre-stored. In detail, the search unit 750 may search for an image forming apparatus positioned in a preset distance range (e.g., 1 km) from a position of the mobile device. This distance range may vary by a selection of a user or the like. Also, this search result may be one or multiple. If the search result is one, an apparatus selection process in the mobile device that will be described later may be omitted. If the search result is multiple, a selection of an image forming apparatus that is to execute a job in the mobile device that will be described later may be performed.

Here, the search unit 750 may search for at least one image forming apparatus adjacent to the mobile device among a plurality of image forming apparatuses in consideration of a function and option information requested by the user. For example, if a job that the user wants to execute is color printing, the search unit 750 may search for an image forming apparatus capable of performing color printing among image forming apparatuses positioned in a preset distance range from the mobile device.

Also, the search unit 750 may search for at least one image forming apparatus adjacent to the mobile device among currently usable image forming apparatuses based on state information of an image forming apparatus. If an error occurs in a corresponding image forming apparatus or a current job is delayed and thus is not immediately usable although the image forming apparatus registered in a current service is in a preset range, the image forming apparatus may filter this although the image forming apparatus is positioned in the preset distance range.

Also, the search unit 750 may search for at least one image forming apparatus adjacent to the mobile device among a plurality of image forming apparatuses further in consideration of pre-stored operation time information respectively about a plurality of image forming apparatuses.

The conversion unit 760 converts the received printing file into printing data that may be processed in the selected image forming apparatus. In detail, the conversion unit 760 may determine whether the printing file received through the communication interface unit 710 is recognizable in the selected image forming apparatus 200 and, if it is determined that the received printing file is recognizable in the selected image forming apparatus 200, convert the received printing file into printing data that may be processed in the selected image forming apparatus.

The account management unit 770 manages an account of a user and an account of an image forming apparatus that use the above-described service. The account management unit 770 may perform a history about charges occurring due to using of the above-described service and account charges.

The control unit 780 controls elements of the cloud server 700. In detail, if a use request of an image forming apparatus and position information of the mobile device are received from the mobile device, the control unit 780 may control the search unit 750 to search for at least one image forming apparatus adjacent to the mobile device among a plurality of image forming apparatuses based on position information of a plurality of image forming apparatuses where received position information of the mobile device is pre-stored.

Also, the control unit 780 may control the communication interface unit 710 to provide the mobile device with position information about the searched image forming apparatus.

In addition, the control unit 780 may calculate charges based on a function received from the mobile device 600 and option information of the function. In detail, the control unit 780 may calculate charges in consideration of the received function, the option information of the function, and charge cost of the selected image forming apparatus.

Also, the control unit 780 may notify the mobile device 600 of the calculated charges and perform charging according to charge information transmitted in response to this.

In addition, the control unit 780 may control the communication interface unit 710 to transmit information for identifying a user corresponding to the mobile device 600 to the searched image forming apparatus 200.

As described above, the cloud server 700 according to the present exemplary embodiment may search for the image forming apparatus 200 adjacent to the mobile device 600, provide the mobile device 600 with the searched image forming apparatus 200, and enable a job to be executed in the searched image forming apparatus 200, and thus the user may easily execute a printing job in any place. Also, the image forming apparatus 200 may enable jobs for a pre-registered user and a particular user to be executed and thus improve a use frequency of the image forming apparatus. In addition, the image forming apparatus 200 may relay and process charges issued in this process, and thus user convenience may be improved.

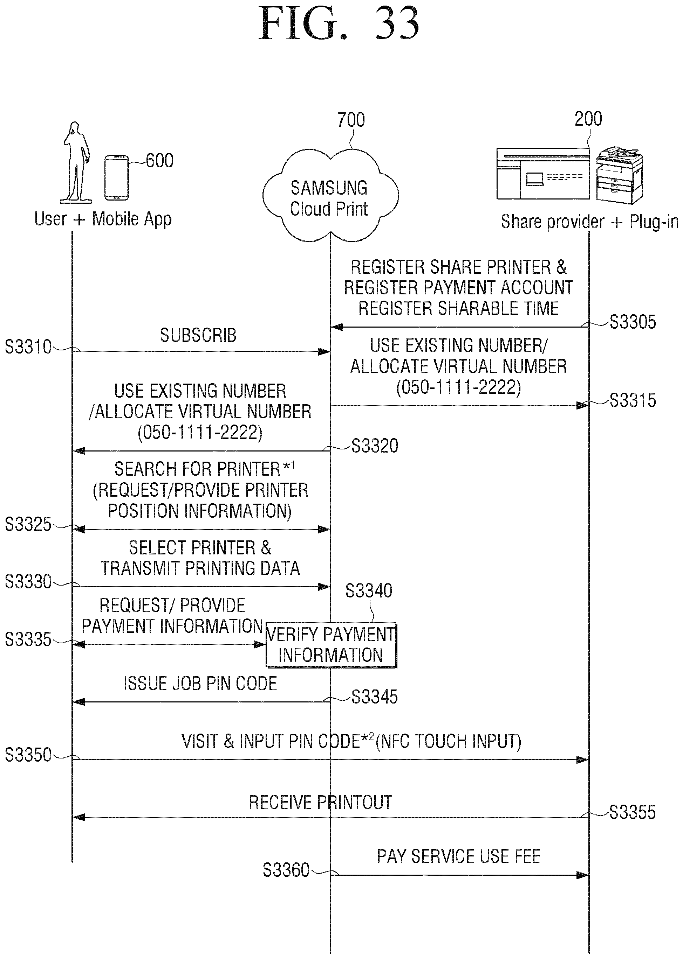

FIG. 33 is a sequence diagram illustrating an operation of a printing system according to an exemplary embodiment of the present invention.

Referring to FIG. 33, a manager of the image forming apparatus 200 may register that a service according to the present exemplary embodiment is provided in the cloud server 700 in operation S3305. In detail, the image forming apparatus 200 may transmit position information, operation time information, and information about charge cost of the image forming apparatus 200 to the cloud server 700. Here, the cloud server 700 may store transmitted information and allocate identification information (i.e., a phone number) about the corresponding image forming apparatus 200 in operation S3315.

Also, the mobile device 600 may register that the service according to the present exemplary embodiment is provided in the cloud server 700 in operation S3310. In detail, the mobile device 600 may transmit information (e.g., a phone number of a mobile device, user login information (an ID and passwords), and the like) for identifying the mobile device 600 and payment account information to the cloud server 700. Here, the cloud server 700 may store information transmitted from the mobile device 600 and allocate identification information about the corresponding mobile device 600 in operation S3320.

The mobile device 600 may transmit a job execution request and position information thereof to the cloud server 700 in operation S325. In response to this, the cloud server 700 may search for an image forming apparatus adjacent to the mobile device 600 and transmit information about the searched image forming apparatus to the mobile device 600.

The mobile device 600 may select an image forming apparatus that is to execute a job based on the transmitted information about the image forming apparatus and transmit a job execution command of the selected image forming apparatus to the cloud server 700 in operation S3330. Here, if a job execution command of a user is a printing command, a printing file may be transmitted to the cloud server 700.

The cloud server 700 calculates charges associated with a job execution and transmits the charges to the mobile device 600. In response to this, the mobile device 600 may perform payment for the charges in operation S3335. Also, the cloud server 700 may verify information about the payment and check whether the payment is a legal payment in operation S3340.

The cloud server 700 may generate a pin code and transmit the pin cod to the mobile device 600 in operation S3345. Also, the cloud server 700 transmits the generated pin code and a job execution command to the image forming apparatus 200.

A user of the mobile device 600 may move to the image forming apparatus 200 to input the received pin code into the image forming apparatus 200. The user may input the pin code by using an NFC tag.

The image forming apparatus 200 may execute a job corresponding to the input pin code in operation S3355 and notify the cloud server 700 of a completion of the job execution. In response to this, the cloud server 700 may pay service use fee to an account corresponding to the corresponding image forming apparatus 200 in operation S3360.

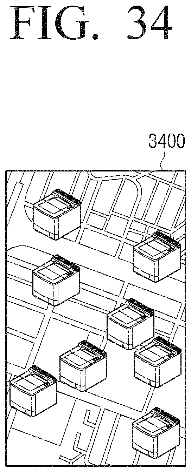

FIGS. 34 through 37 are views illustrating various examples of a user interface window that may be displayed on the mobile device of FIG. 28.

In detail, FIG. 34 illustrates an example of a user interface window displaying information of an image forming apparatus provided from the cloud server 700 after a job execution request is transmitted from the cloud server 700.

Referring to FIG. 34, a user interface window 3400 displays a map where the mobile device 600 is based on a position and display a position of an image forming apparatus, which may be used by the mobile device 600, on the map.

Merely a position of an image forming apparatus is displayed on a map in the illustrated example, but information about charge cost of each image forming apparatus and information about a service use time and the like may be displayed together.

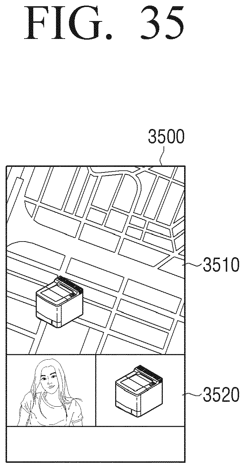

A user may select one selected from a plurality of image forming apparatuses that are displayed. If a selection described above is made, a user interface window as shown in FIG. 35 may be displayed.

FIG. 35 illustrates an example of a user interface window that may be displayed if a user selects one from a plurality of image forming apparatuses that are displayed.

Referring to FIG. 35, a user interface window 3500 includes a first area 3510 displaying a position of a selected image forming apparatus in a map shape and a second area 3520 displaying detailed information of the selected image forming apparatus.

The first area 3510 is an area that displays a position of an image forming apparatus selected by the user along with a map.

The second area 3520 is an area that displays detailed information such as charge cost, address information, a service use time, a usable function, and the like of the image forming apparatus selected by the user.

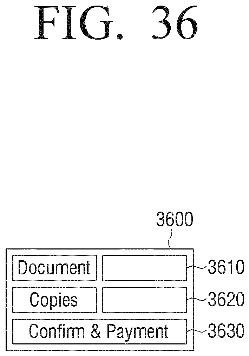

If it is determined that a job is executed by using the image forming apparatus selected by the user, a user interface window for inputting information for calculating charges may be displayed as shown in FIG. 36.

FIG. 36 illustrates an example of a user interface window through which information necessary for calculating charges is input.

Referring to FIG. 36, a user interface window 3600 includes an area 3610 for inputting a selection of a file, an area 3620 for inputting a print run, and a confirm area 3630.

The area 3610 for inputting the selection of the file is an area for selecting a printing file, which is to execute a printing job, among printing files pre-stored in the mobile device 600.

The area 3620 for inputting the print run is an area for setting how many copies are to be printed.

The confirm area 3630 is an area for inputting an execution of a job according to the selected printing file and the print run.

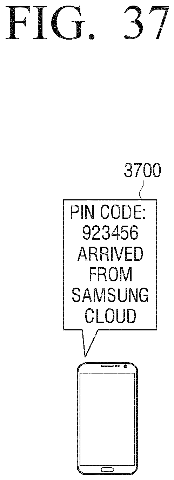

If the user selects the confirm area 3630, charges may be displayed to the user, and thus payment for the charges may be performed or pin code information as shown in FIG. 37 may be displayed.

FIG. 37 illustrates an example of a user interface window displaying a pin code transmitted from the cloud server 700.

Referring to FIG. 37, a user interface window 3700 may display pin code information transmitted from the cloud server 700. This display is a display of a message window according to a data transmission or a message display through a character service such as SMS, MMS, or the like.

FIG. 38 illustrates an example of a user interface window that may be displayed in the image forming apparatus of FIG. 28.

Referring to FIG. 38, a user interface window 3800 includes a third area 3810 for inputting login information and a fourth area 3820 for inputting a pin code.

The third area 3810 is an area for inputting a user ID and passwords. In detail, a user pre-registered in a corresponding image forming apparatus may input an ID and passwords into the third area to perform an authentication for the image forming apparatus.

The fourth area 3820 is an area for inputting the pin code. In detail, a non-registered user of the corresponding image forming apparatus may input a pin code received through the mobile device 600 into the fourth area to progress a job execution requested through the cloud server 700.

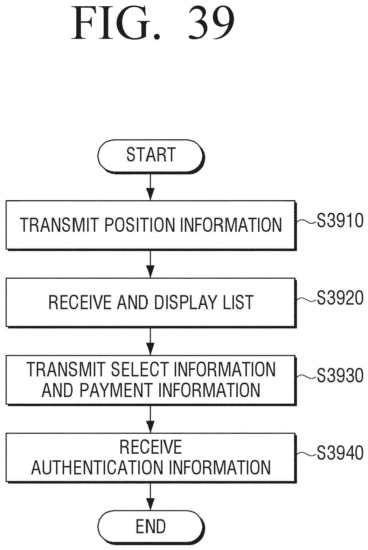

FIG. 39 is a flowchart illustrating a printing control method in a mobile device according to an exemplary embodiment of the present invention.

In operation S3910, position information of a mobile device is generated, and a use request of an image forming apparatus and the generated position information are transmitted to a cloud server. In detail, if the mobile device includes a GPS measurement module, position information may be generated based on information measured by the GPS measurement module and position information may be generated by performing a position measurement by using 3G, Wifi, or the like in an apparatus that does not include a GPS measurement module. Alternatively, information where the mobile device is positioned may be input from the user to generate the position information.

Also, potion information about at least one image forming apparatus adjacent to the mobile device and charges are received from the cloud server, and the received position information about the at least one image forming apparatus is displayed in operation S3920.

In addition, if an image forming apparatus that is to execute a job is selected, information about the selected image forming apparatus and payment information corresponding to charges are provided for the cloud server in operation S3930.

If an authentication method in the image forming apparatus is a pin code method, a pin code may be received from the cloud server 700 after transmitting payment information.

As described above, the printing control method in the mobile device according to the present exemplary embodiment may notify a user of an image forming apparatus adjacent to the mobile device 600 and enable a job to be executed in the corresponding image forming apparatus, and thus the user may easily execute a printing job in any place. The printing control method in the mobile device as shown in FIG. 39 may be performed in a mobile device having the configuration of FIG. 30 or in mobile devices having other types of configurations.

Also, the printing control method in the mobile device as described above may be embodied as a program (or an application) including a computer executable algorithm. The program may be stored and provided on a non-transitory computer readable medium.

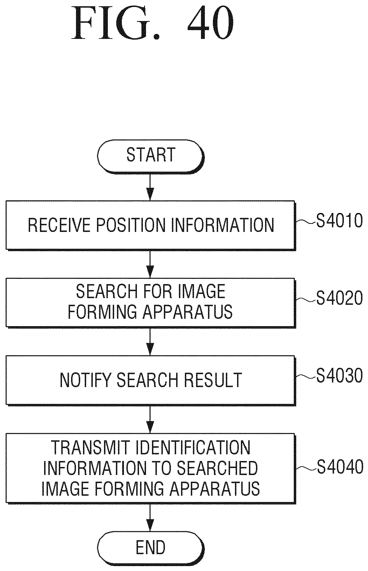

FIG. 40 is a flowchart illustrating a printing control method in a cloud server, according to an exemplary embodiment of the present invention.

A user request of an image forming apparatus and position information of a mobile device are received from the mobile device in operation S4010.

In operation S4020, at least one image forming apparatus adjacent to the mobile device is searched for among a plurality of image forming apparatuses based on position information of a plurality of image forming apparatuses where the received position information of the mobile device is pre-stored.

Position information about the searched image forming apparatus is provided for the mobile device in operation S4030.

Information for identifying a user corresponding to the mobile device is transmitted to the searched image forming apparatus in operation S4040.

As described above, the printing control method in the cloud server according to the present exemplary embodiment may provide the mobile device with information about an image forming apparatus adjacent to the mobile device and enable a job to be executed in the image forming apparatus, and thus the user may easily execute a printing job in any place. The printing control method in the cloud server as shown in FIG. 40 may be performed in a cloud server having the configuration of FIG. 32 or in cloud servers having other types of configurations.

Also, the printing control method in the cloud server as described above may be embodied as a program including a computer executable algorithm, and the program may be stored and provided on a non-transitory computer readable medium.

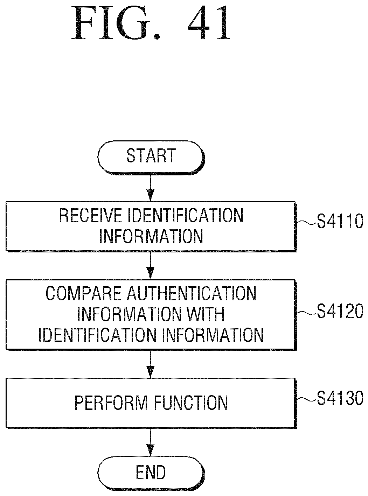

FIG. 41 is a flowchart illustrating a printing control method in an image forming apparatus, according to an exemplary embodiment of the present invention.

Operation time information of an image forming apparatus may be transmitted to be registered in a service according to the present exemplary embodiment.

After this registration, a job execution command and first user identification information corresponding to the job execution command are received within a time corresponding to the operation time information in operation S4110. Here, if a user job execution command is a printing job, a printing file may be received from the cloud server. Here, the first user identification information may be user login information, a phone number of a mobile device, a pin code, or the like, and the cloud server may transmit merely one of the above-described information to the image forming apparatus or may transmit a plurality of pieces of information to the image forming apparatus.

Also, if second user identification information is input, the first identification information is compared with the second user identification information in operation S4120. Here, the second user identification information may be user login information, a phone number of the mobile device, a pin code, or the like.

If the first user identification information corresponds to the second user identification information, a function corresponding to the job execution command is performed in operation S4130. Here, the function may be one selected from a printing function, a copy function, a scan function, and a fax transmission function.

As described above, the printing control method in an image forming apparatus according to the present exemplary embodiment may provide a printing function for a user who is not a user pre-registered in the corresponding image forming apparatus and may easily perform charging from the corresponding user. The printing control method as shown in FIG. 41 may be performed in an image forming apparatus having the configuration of FIG. 31 or in image forming apparatuses having other types of configurations.

Also, the printing control method in the image forming apparatus as described above may be embodied as a program including a computer executable algorithm, and the program may be stored and provided on a non-transitory computer readable medium.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. An image forming apparatus connected to a network comprising a plurality of image forming apparatuses, the image forming apparatus comprising:
a storage unit which stores information about at least one other image forming apparatus constituting a virtual device along with the image forming apparatus among the plurality of image forming apparatuses;
a communication unit which performs communication with the at least one other image forming apparatus;
a user interface unit which displays a UI screen comprising an object corresponding to the virtual device;
a task processing unit; and
a control unit which, if the virtual device is selected and a job execution command is input through the user interface unit, controls the task processing unit to process at least one first task among a plurality of tasks constituting one job, requests the at least one other image forming apparatus to process at least one second task among the plurality of tasks, and distributes the job.

2. The image forming apparatus of claim 1, wherein the control unit selects the other image forming apparatus based on distances of the image forming apparatus from the plurality of image forming apparatuses and automatically matches the selected other image forming apparatus with the image forming apparatus to generate the virtual device.

3. The image forming apparatus of claim 2, wherein the communication unit receives adjacent access point information of each of the plurality of image forming apparatuses,
wherein the control unit searches for an access point accessible by the image forming apparatus, selects other image forming apparatus adjacent to the image forming apparatus based on the searched access point and the received adjacent access point information, and matches the selected image forming apparatus with the virtual device.

4. The image forming apparatus of claim 1, wherein the control unit selects other image forming apparatus positioned in a shortest distance among the plurality of image forming apparatuses based on a distance from a user position and automatically matches the selected other image forming apparatus with the image forming apparatus to generate the virtual device.

5. The image forming apparatus of claim 1, wherein the control unit automatically selects at least one other image forming apparatus among the plurality of image forming apparatuses based on a preset priority criterion and automatically matches the selected other image forming apparatus with the image forming apparatus to generate the virtual device,
wherein the preset priority criterion is set based on at least one selected from job execution cost, a job execution speed, a distance between apparatuses, and a distance between an apparatus and a user.

6. The image forming apparatus of claim 1, wherein if user position information is input through the UI screen, the control unit automatically selects an image forming apparatus corresponding to the user position information among the plurality of image forming apparatuses and matches the selected image forming apparatus with the virtual device.

7. The image forming apparatus of claim 1, wherein if the image forming apparatus matches respectively with the plurality of image forming apparatuses to generate a plurality of virtual devices, the control unit displays a UI screen comprising a plurality of objects respectively corresponding to the plurality of virtual devices on the user interface unit.

8. The image forming apparatus of claim 7, wherein if one object is selected on the UI screen, the control unit displays a UI screen comprising a menu provided from a virtual device corresponding to the selected object.

9. The image forming apparatus of claim 1, wherein the control unit transmits information about the virtual device and position information of the image forming apparatus to a server apparatus to register the information about the virtual device and the position information of the image forming apparatus.

10. The image forming apparatus of claim 1, wherein if user identification information is input, the control unit requests a virtual device generation history corresponding to the user identification information from the server apparatus, receives the virtual device generation history, displays the virtual device generation history on the display unit, and if one of the virtual device generation history is selected, restores a virtual device based on virtual device information corresponding to the selected history.

11. The image forming apparatus of claim 1, wherein if a plurality of other image forming apparatuses match with the virtual device, the control unit differently adjusts a size of a task, which is to be processed by the plurality of other image forming apparatuses, based on distances between the plurality of other image forming apparatuses and the image forming apparatus.

12. The image forming apparatus of claim 1, wherein if the image forming apparatus matches with the at least one other image forming apparatus to generate the virtual device, the control unit displays a UI screen, which activates and displays at least one option settable in the virtual device, on the user interface unit.

13. The image forming apparatus of claim 1, wherein the communication unit receives UI option information from at least one other image forming apparatus constituting a virtual device along with the image forming apparatus,
wherein the control unit applies the UI option information to a UI layout of the image forming apparatus to generate a UI screen for setting an option of the at least one other image forming apparatus and displays the UI screen on the display unit.

14. The image forming apparatus of claim 1, wherein if at least one first task is processed in the image forming apparatus, and at least one second task is processed in the at least one other image forming apparatus, the control unit controls the communication unit to transmit position images and job execution information of the image forming apparatus and the at least one other image forming apparatus to a preset user contact number.

15. The image forming apparatus of claim 1, wherein the task processing unit processes the at least one first task to output a printed result,
wherein if the printed result has discontinuous page information, the control unit controls the task processing unit to change a printing output direction of a part of the printed result where page information is discontinuous.
